# FASCICULE DE BREVET EUROPEEN

(11) **EP 2 297 714 B1**
(45) Date de publication et mention de la délivrance du brevet: **12.04.2017**
(21) Numéro de dépôt: 09765997.3
(22) Date de dépôt: 20.05.2009
(51) Int. Cl.: G06Q 10/08, G08B 13/14

(54) **DISPOSITIF ET PROCÉDÉ DE VÉRIFICATION D'INTÉGRITÉ D'OBJETS PHYSIQUES**
EINRICHTUNG UND VERFAHREN ZUM PRÜFEN DER INTEGRITÄT PHYSISCHER OBJEKTE
DEVICE AND METHOD FOR CHECKING THE INTEGRITY OF PHYSICAL OBJECTS

(30) Priorité: 22.05.2008 FR 0802783; 09.03.2009 FR 0901064
(43) Date de publication de la demande: 23.03.2011
(60) Demande divisionnaire: 12179421.8
(73) Titulaire: INRIA - Institut National de Recherche en Informatique et en Automatique, 78150 Le Chesnay (FR)
(72) Inventeur: BÂNATRE, Michel, 35111 La Fresnais (FR); COUDERC, Paul, 35700 Rennes (FR); BECUS, Mathieu, 35200 Rennes (FR); ALLARD, Fabien, 35000 Rennes (FR)
(74) Mandataire: Cabinet Netter
(86) Numéro de dépôt international: PCT/FR2009/000597
(87) Numéro de publication internationale: WO 2009/153435

(56) Documents cités:
- WO-A-2008/021874
- US-A1- 2005 200 487

## Description

L'invention a trait à un dispositif de surveillance d'objets physiques.

De très nombreuses situations nécessitent une surveillance d'objets physiques.

Par exemple, une crainte très répandue chez le voyageur, quelque soit son moyen de transport, est de perdre ou d'oublier une partie de ses bagages, ou encore de se faire subtiliser ou substituer une partie de ceux-ci.

Actuellement, il existe très peu de solutions pour rassurer le voyageur, et aucune d'entre elles n'est en pratique satisfaisante.

L'étiquetage des bagages par exemple n'est efficace que si un contrôle de l'association des bagages et de leur propriétaire est effectué en permanence, ou du moins en continu sur des périodes de temps particulièrement critiques, telles que l'arrêt d'un train en gare, la récupération des bagages après débarquement, ou encore le passage de points de sécurité. De tels contrôles n'existent pas, ou au mieux ils sont aléatoires.

En fait, à chaque fois que le voyageur s'éloigne physiquement de ses bagages, y compris lorsqu'il les place dans un compartiment prévu à cet effet quelque peu distant de sa place assise, il encourt un risque.

Une surveillance continue et systématique des bagages doit pouvoir être mise en place simplement, en particulier sans que le voyageur ait à investir dans des dispositifs de protection complexes.

Il apparaît souhaitable qu'une telle surveillance puisse être fournie en tant que service au plus grand nombre de voyageurs, sans pour autant nécessiter d'importants investissements, en particulier en matériel.

Il est également indispensable que cette surveillance ne vienne pas interférer avec les dispositifs de sécurité et de contrôle actuellement établis, par exemple pour lutter contre le terrorisme.

L'invention ne vise pas seulement la surveillance des bagages. La surveillance d'objets physiques représente un objectif important dans de nombreux autres secteurs, tels que le transport de marchandises, la distribution de courrier, la sécurité d'établissements publics ou privés, par exemple.

L'invention a pour objectif d'améliorer la situation.

Elle vise un dispositif de surveillance d'objets physiques comprenant un ou plusieurs télélecteurs à courte portée, des éléments à mémoire destinés à être attachés à des objets physiques, un contrôleur agencé de manière à exécuter une fonction de lecture capable de coopérer avec le ou les télélecteurs pour acquérir des données contenues dans des éléments à mémoire du voisinage, et exécuter une fonction de validation d'intégrité capable de distinguer dans les données acquises des identifiants individuels, propres à chacun des éléments à mémoire, et des données de description de groupe, stockées par certains au moins de ces éléments à mémoire, puis de vérifier la suffisance des données de description de groupe, tout en vérifiant la conformité des identifiants individuels aux données de description de groupe correspondantes.

Un tel dispositif présente d'abord l'avantage d'une infrastructure simple, peu coûteuse et autonome, principalement constituée d'un ou plusieurs télélecteurs et d'un contrôleur. Les objets physiques peuvent être surveillés sur des zones de grande étendue, par exemple en multipliant les télélecteurs. Les objets physiques peuvent aussi bien être surveillés sur des zones de faible étendue.

Un tel dispositif permet de réaliser une association d'objets physiques en un objet agrégé. Le dispositif permet alors encore de vérifier qu'un objet agrégé est complet, ou intègre, dans le sens où l'ensemble des objets physiques constituant celui-ci est présent dans une zone donnée. Par exemple, il devient possible de vérifier qu'un voyageur a autour de lui l'ensemble de ses bagages en associant ce voyageur et ses bagages en un même obj et agrégé.

À titre d'exemple, la création d'un objet agrégé est aisée puisqu'elle consiste principalement en une programmation des éléments à mémoire et en l'apposition de ceux-ci sur les objets physiques.

Le dispositif selon l'invention est autonome. Il n'implique aucune connexion à un réseau de données, même d'envergure locale, à l'inverse de pratiquement l'ensemble des dispositifs de sécurité actuels. Ces dispositifs s'appuient en effet principalement sur l'établissement de bases de données d'importance croissante pour tracer les objets physiques.

Le dispositif selon l'invention ne nécessite aucune adaptation du contrôleur à un objet agrégé en particulier : un objet agrégé est défini grâce à la programmation d'éléments à mémoire seulement, sans programmation préalable du dispositif de surveillance. Il en résulte de faibles coûts de déploiement, ces coûts étant principalement liés à l'achat et à l'installation des télélecteurs. D'ailleurs, les coûts relatifs aux éléments à mémoire et à leur programmation peuvent être laissés à la charge de l'usager, car la programmation peut être réalisée par l'usager.

Le dispositif selon l'invention est capable d'offrir simultanément une surveillance d'objets physiques de nature potentiellement très différente : un même dispositif peut surveiller à la fois des bagages de voyageurs, l'équipement de personnels ou encore la constitution d'un groupe de personnes, de documents papiers, de véhicules dans un parking ou de bicyclettes dans un garage partagé par plusieurs personnes, le contenu de colis postaux ou encore des boîtes de médicaments. Autrement dit, le dispositif selon l'invention est capable de vérifier l'intégrité d'un objet agrégé constitué par la programmation d'éléments à mémoire, indépendamment de la nature des objets physiques qui portent les éléments à mémoire.

L'invention vise également un dispositif de surveillance d'objets physiques, du type comprenant un ou plusieurs télélecteurs à courte portée, des éléments à mémoire destinés à être attachés à des objets physiques, un contrôleur agencé de manière à exécuter une fonction d'écriture capable de coopérer avec le ou les télélecteurs pour écrire dans des éléments à mémoire du voisinage des données d'identifiants individuels, propres à chacun des éléments à mémoire, et des données de description de groupe, stockées par certains au moins de ces éléments à mémoire.

D'autres caractéristiques et avantages de l'invention apparaîtront à l'examen de la description détaillée ci-après, et des dessins annexés sur lesquels :
- La figure 1 est un schéma montrant un objet agrégé.
- La figure 2 est un schéma illustrant un exemple d'étiquette pour l'objet agrégé de la figure 1.
- La figure 3 est un schéma illustrant un dispositif de surveillance selon l'invention.
- La figure 4 est un ordinogramme illustrant le fonctionnement d'un contrôleur pour le dispositif de la figure 3 dans un premier mode de réalisation de l'invention.
- La figure 5 est un ordinogramme illustrant le fonctionnement d'une partie du contrôleur de la figure 4.
- La figure 6 est analogue à la figure 4 pour un second mode de réalisation de l'invention.
- La figure 7 est un schéma illustrant un agencement particulier du dispositif de l'invention, à usage dans le mode de réalisation de la figure 6.
- La figure 8 est un ordinogramme illustrant le fonctionnement d'une partie du contrôleur dans un troisième mode de réalisation de l'invention.
- La figure 9 est un schéma illustrant un exemple de table d'enregistrement pour le contrôleur du dispositif de l'invention.
- La figure 10 est un ordinogramme illustrant le fonctionnement d'une partie du contrôleur dans le troisième mode de réalisation de l'invention.
- La figure 11 est un schéma montrant plusieurs objets agrégés,
- La figure 12 est un schéma illustrant un développement de l'invention avec plusieurs objets agrégés,
- La figure 13 est un schéma illustrant une variante d'étiquette pour les objets agrégés de la figure 11,
- La figure 14 est un schéma illustrant une première application du dispositif selon l'invention,
- La figure 15 est un schéma illustrant une seconde application du dispositif selon l'invention,
- La figure 16 est un schéma illustrant une troisième application du dispositif selon l'invention,
- La figure 17 est un schéma illustrant une quatrième application du dispositif selon l'invention, en tant que développement de la troisième application,
- Les figures 18 et 19 sont des ordinogrammes illustrant le fonctionnement d'un contrôleur à usage pour la quatrième application de l'invention.

D'autre part :
- L'annexe 1 est un extrait de programme informatique en pseudo-code à usage dans le premier mode de réalisation de l'invention.
- L'annexe 2 est analogue à l'annexe 1 pour le second mode de réalisation de l'invention.
- L'annexe 3 et l'annexe 4 sont analogues à l'annexe 1 pour le cas où plusieurs objets agrégés sont utilisés dans l'invention.

Les dessins et les annexes à la description comprennent, pour l'essentiel, des éléments de caractère certain. Ils pourront donc non seulement servir à mieux faire comprendre la description, mais aussi contribuer à la définition de l'invention, le cas échéant.

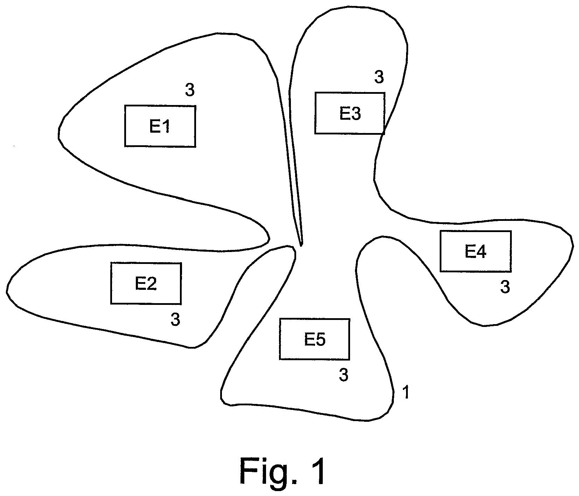

La figure 1 illustre un objet agrégé 1 constitué de l'union d'objets élémentaires 3, ici E1, E2, E3, E4 et E5.

Chacun des objets élémentaires 3 prend ici la forme d'un dispositif à mémoire, interrogeable à courte distance, désigné ci-après étiquette 5, destiné à être porté par un objet ou une personne physique.

Chacune des étiquettes 5 constituant l'objet agrégé 1 maintient en mémoire des données d'identification qui lui sont propres.

Des données de description de l'objet agrégé 1 sont mémorisées par certaines au moins des étiquettes de cet objet agrégé 1. Ces données de description permettent de juger de l'intégrité de l'objet agrégé 1 uniquement à partir d'un ensemble de données d'identifiants individuels d'étiquettes 5.

De préférence, chacune des étiquettes 5 mémorise en outre des données d'appartenance à l'objet agrégé 1 permettant d'associer l'identifiant individuel de l'étiquette 5 en question à l'objet agrégé 1.

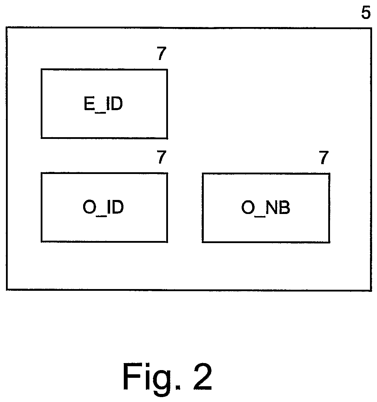

La figure 2 montre un exemple d'étiquette 5.

L'étiquette 5 maintient, en une ou plusieurs zones mémoire 7, des données d'identifiant élémentaire E_ID, propres à l'étiquette 5 en question, des données d'identifiant d'objet O_ID, communes à l'ensemble des étiquettes 5 constituant l'objet 1, et, en option, des données de cardinal d'objet O_NB, indiquant le nombre d'étiquettes 5 constitutives de l'objet agrégé 1.

En pratique, il suffit que l'une des étiquettes 5 constituant l'objet agrégé 1 maintienne ces données de cardinal d'objet O_NB. Une telle étiquette 5 peut alors être qualifiée d'étiquette maîtresse, ou d'objet élémentaire maître.

Les données de description de l'objet agrégé 1 sont ici constituées des données d'identifiant d'objet O_ID mémorisées sur chacune des étiquettes 5 de l'objet 1 et des données de cardinal d'objet O_NB stockées sur l'une au moins de ces étiquettes 5.

Selon une première variante de réalisation, les données d'identifiant d'objet O_ID peuvent prendre la forme d'une valeur-résultat d'une fonction de hashage générée à partir de l'ensemble des données d'identifiant individuel E_ID des étiquettes 5 constituant l'objet agrégé 1.

L'intégrité de l'objet agrégé 1 peut alors être vérifiée en testant la concordance de la valeur de hashage avec un ensemble de données d'identifiants individuels E_ID d'étiquettes 5. Par exemple, une valeur de hashage peut être générée à partir de ces données d'identifiants individuels E_ID, à l'aide d'une fonction de hashage analogue ou compatible à la fonction de hashage utilisée pour la génération de l'identifiant d'objet O_ID, puis en comparant cette valeur à l'identifiant d'objet O_ID. L'objet agrégé 1 est alors intègre si la valeur générée et l'identifiant d'objet O_ID concordent.

Dans cette variante de réalisation, les données de cardinal d'objet O_NB sont optionnelles : l'identifiant d'objet O_ID suffit à vérifier la concordance de l'objet agrégé 1 avec un ensemble d'identifiants individuels E_ID. Autrement dit, les données de description de l'objet agrégé 1 sont ici constituées de l'identifiant d'objet O_ID.

La qualité d'étiquette maîtresse peut être en supplément codée dans une étiquette particulière, par exemple par la mise à la valeur 1 d'un bit mémoire réservé.

L'identifiant élémentaire E_ID peut être quelconque. Cet identifiant peut être intégré à une étiquette 5 lors de la fabrication de celle-ci, par exemple sous la forme d'un numéro de produit universel.

Selon une seconde variante de réalisation, les données de description de l'objet agrégé 1 comprennent une liste des identifiants individuels E_ID des étiquettes 5 constituant cet objet agrégé 1. Ces données de description peuvent être mémorisées dans chacune des étiquettes 5, par exemple pour constituer des données d'identifiant d'objet O_ID. Ces données de description peuvent aussi être stockées dans l'une de ces étiquettes 5 seulement, typiquement l'étiquette 5 maîtresse.

Dans cette variante de réalisation, les données de cardinal d'objet O_NB sont optionnelles : la liste des identifiants individuels E_ID comprend implicitement ces données de cardinal d'objet O_NB, et cette liste des identifiants individuels E_ID suffit à vérifier l'intégrité de l'objet agrégé 1 à partir d'un ensemble d'identifiant individuels E_ID.

Selon une troisième variante de réalisation, les données d'identifiant d'objet O_ID prennent la forme d'une valeur-résultat d'une fonction de hashage telle, que l'appartenance de chacun des identifiants individuels E_ID à l'objet agrégé 1 peut être vérifiée à partir de la valeur-résultat et de l'identifiant individuel E_ID en question seulement. Des données de cardinal d'objet O_NB sont mémorisées dans l'une au moins des étiquettes 5, par exemple dans une étiquette maîtresse seulement.

Quelle que soit la variante de réalisation, l'identifiant d'objet O_ID est de préférence statistiquement unique pour éviter que des étiquettes 5 constitutives d'objets agrégés 1 différents soient programmées comme si elles appartenaient à un même obj et agrégé, c' est-à-dire avec un même identifiant d'objet O_ID.

Par exemple, cet identifiant d'objet O_ID comprend un préfixe établi à partir d'un identifiant unique du lecteur utilisé pour la programmation des étiquettes 5 constituant l'objet agrégé 1.

La programmation des étiquettes 5 peut être réalisée au moyen d'un contrôleur exécutant une fonction de création d'objet, ou fonction CREATION. La fonction CREATION est agencée de manière à interagir avec un lecteur d'étiquettes pour commander l'inscription des données d'identification propres à chacune des étiquettes 5, des données de description d'objet agrégé 1 et, en option, des données d'appartenance à l'objet agrégé 1, dans la mémoire de chacune des étiquettes 5.

Par exemple, la fonction CREATION commande l'inscription des données d'identifiant individuel E_ID, d'identifiant d'objet O_ID, et de cardinal d'objet O_NB.

La fonction CREATION peut être agencée de manière à retourner des données d'information sur les opérations d'écriture, telles que le nombre d'étiquettes programmées et/ou l'identité de celles-ci. En particulier, les étiquettes 5 peuvent présenter un aspect extérieur teinté dont la couleur est codée en mémoire. Et la fonction CREATION peut alors être agencée de manière à retourner une liste de couleurs correspondant aux étiquettes 5 programmées pour vérifier visuellement le bon fonctionnement de la programmation.

Encore en option, la fonction CREATION peut commander l'écriture en mémoire d'un identifiant de service S_ID dans chacune des étiquettes 5 de l'objet agrégé 1. Cet identifiant de service S_ID permet d'associer les étiquettes 5 et l'objet agrégé 1 à un service particulier.

Les étiquettes 5 peuvent être protégées en écriture et éventuellement en lecture, par exemple au moyen de clés chiffrées.

La fonction CREATION peut être agencée de manière à écrire chacune des étiquettes 5 constitutives d'un objet agrégé 1 de manière séquentielle, c'est-à-dire une étiquette 5 après l'autre, au moins du point de vue de l'utilisateur.

Un lecteur d'étiquettes à très courte portée, capable uniquement de lire des étiquettes 5 qui lui sont physiquement présentées, une par une, suffit alors pour l'interaction avec la fonction CREATION. Les lecteurs de ce type présentent généralement un encombrement réduit, en sorte qu'un usager peut en conserver un exemplaire à son domicile et programmer ainsi les étiquettes 5 à sa convenance. Dans ce cas, le contrôleur peut avantageusement prendre la forme d'un produit de programme informatique exécuté sur un ordinateur personnel relié au lecteur en question. Le lecteur d'étiquettes en question peut être portable, ou à tout le moins mobile, en sorte qu'il est possible, par exemple, de programmer des étiquettes 5 déjà apposées sur des objets physiques.

Dans cette réalisation, la fonction CREATION peut recevoir le nombre d'étiquettes 5 à programmer en tant que paramètre, par exemple entré par l'usager. Un unique passage devant le lecteur d'étiquettes de chacune des étiquettes 5 suffit alors à la programmation de l'objet agrégé 1.

En variante, l'ensemble des étiquettes 5 à programmer est lu préalablement à l'opération d'écriture, de manière que la fonction CREATION acquiert les identifiants individuels E_ID de chacune des étiquettes 5 destinées à constituer l'objet agrégé 1, et établisse le nombre de ces étiquettes 5. Cette variante est plus particulièrement avantageuse lorsque chacune des étiquettes 5 présente un identifiant individuel E_ID préalablement à cette opération de programmation et que cet identifiant n' a pas à être programmé à nouveau. Typiquement ceci est le cas lorsque les étiquettes 5 sont commercialisées avec un identifiant individuel E_ID déjà mémorisé. Cette variante est également avantageuse lorsqu'une fonction de hashage basée sur les identifiants individuels E_ID est mise en oeuvre.

Dans un mode de réalisation particulier, la fonction de hashage peut être mise en oeuvre à partir, en plus des identifiants individuels E_ID, d'une valeur de clé publique, auxquelles correspondent une valeur de clé privée. Cette valeur de clé publique peut être intégrée à la fonction CREATION. En variante, cette clé publique peut être constituée par l'identifiant individuel d'une étiquette n'appartenant pas à l'objet agrégé 1, en sorte que la fonction de hashage peut être commune à des modes de réalisation n'utilisant pas de valeur de clé privée. Plusieurs valeurs de clés publiques peuvent être intégrées à la fonction CREATION, auxquelles correspondent des valeurs de clés privées.

En variante encore, la fonction CREATION peut être agencée de manière à réagir à une instruction de fin en écrivant une dernière étiquette 5. En particulier, cette dernière étiquette 5 peut être une étiquette 5 de type maîtresse. L'instruction de fin peut être déclenchée par l'usager, ou automatiquement à l'occurrence d'un événement particulier. Dans cette variante, les opérations de lecture et d'écriture d'une étiquette peuvent survenir de manière simultanée, du point de vue utilisateur, c'est-à-dire que chacune des étiquettes 5 constitutives d'un objet agrégé 1 peut être lue et programmée avant l'étiquette 5 suivante. Autrement dit, il n'est pas nécessaire de réaliser ici un compte des étiquettes 5 constitutives de l'objet agrégé 1 avant programmation des étiquettes 5.

La fonction CREATION peut également être agencée de manière à écrire chacune des étiquettes 5 constitutives d'un objet agrégé 1 de manière simultanée, au moins du point de vue utilisateur. Un lecteur d'étiquettes capable de lire simultanément un ensemble d'étiquettes 5 dans un volume déterminé est alors requis. Un tel lecteur peut par exemple intégrer une antenne directionnelle, ou bi-directionnelle, lorsque les étiquettes 5 sont des étiquettes radiofréquences.

La fonction CREATION est alors avantageusement agencée de manière à lire au préalable l'ensemble des étiquettes 5 présentes dans le volume déterminé et à programmer celles-ci de manière à constituer un même objet agrégé 1. Pour l'utilisateur, l'opération de lecture apparaît concomitante à l'opération d'écriture. La création d'un objet agrégé 1 devient alors particulièrement aisée en ce que l'utilisateur n' a qu' à disposer un nombre choisi d'étiquettes 5 dans le volume déterminé pour programmer un objet agrégé 1 constitué de ces étiquettes 5.

Dans cette réalisation, le volume déterminé peut être limité de manière à éviter la programmation simultanée d'étiquettes 5 indésirables. Ceci peut être réalisé au moyen d'écrans imperméables aux moyens de communication de courte portée du lecteur d'étiquettes, typiquement aux ondes radiofréquences, au moins dans la gamme de fréquences envisagée. Les écrans peuvent être mutuellement disposés de manière à former une cabine de programmation.

Lorsqu'un lecteur de très faible portée est utilisé, de l'ordre de quelques dizaines de centimètres carrés par exemple, la délimitation du volume est optionnelle, car la présence d'étiquettes 5 indésirables dans ce volume devient peu probable. Une matérialisation du volume peut néanmoins apparaître avantageuse en ce qu'elle permet à l'utilisateur de visualiser le volume dans lequel les étiquettes 5 doivent être placées.

L'une ou l'autre des variantes de la fonction CREATION peut être utilisée pour créer des objets agrégés 1 constitués d'un nombre différent d'étiquettes 5. Un ensemble d'étiquettes 5 constituant un même objet agrégé 1 peut être commercialisé sous forme de kit, par exemple dans des distributeurs automatiques.

Quelle que soit la variante de réalisation, la fonction CREATION peut être agencée de manière à s'exécuter sur commande d'un utilisateur.

Les étiquettes 5 prennent avantageusement la forme d'étiquettes de type RFID (de l'anglais "*Radio frequency identification*"), interrogeables à distance par radiofréquence, sur une courte portée. Les étiquettes de ce type présentent un coût assez faible. Elles présentent également un encombrement très restreint et une certaine souplesse, ce qui autorise leur apposition sur différents types de supports, y compris à surface non plane. En outre, ces étiquettes peuvent être aisément dissimulées. Les étiquettes 5 peuvent également prendre la forme d'appareils compatibles avec le standard NFC (de l'anglais "*Near field computing*" ou *"Near field communication*").

D'autres formes d'étiquettes peuvent être prévues, en particulier en fonction de développements technologiques futurs.

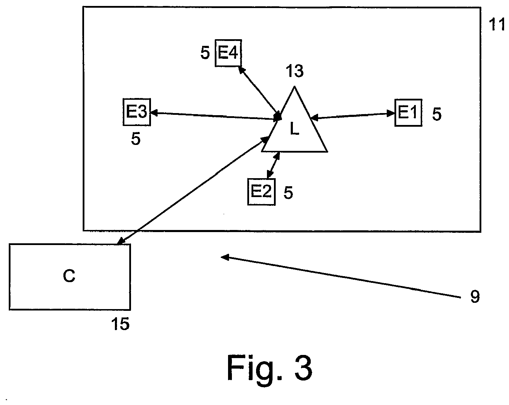

La figure 3 illustre un dispositif de surveillance 9.

Le dispositif de surveillance 9 comprend un lecteur d'étiquettes 13 muni de moyens de communication courte portée adaptés au type d'étiquettes 5, par exemple radiofréquences pour des étiquettes RFID.

Le lecteur d'étiquettes 13 est avantageusement doté de différents moyens de communication de courte portée pour lire différents types d'étiquettes 5.

Le lecteur d'étiquettes 13 est relié à un contrôleur 15 muni de moyens de calcul et d'une mémoire de travail, non représentés.

Le contrôleur 15 est agencé de manière à exécuter une fonction de lecture LECT capable de coopérer avec le lecteur 13 pour acquérir les données mémorisées dans les étiquettes 5 présentes dans la portée du lecteur 13.

La fonction LECT est agencée de manière à coopérer avec la mémoire du contrôleur 15 pour écrire une ou plusieurs tables d'enregistrement rassemblant de manière ordonnées les données acquises des étiquettes 5.

Différentes structures de mémorisation de ces données acquises peuvent être envisagées, en particulier en fonction de besoins spécifiques liés à l'application envisagée.

Par exemple, la table d'enregistrement peut prendre la forme d'un tableau à une entrée, celui-ci rassemblant les identifiants individuels des étiquettes lues. Chaque donnée associée dans une étiquette 5 à un identifiant individuel E_ID est mémorisée dans ce tableau, en association avec l'identifiant individuel E_ID en question, par exemple dans une même ligne du tableau.

La table d'enregistrement peut également prendre la forme d'un fichier de type journal ("*log*" en anglais) rassemblant l'identifiant individuel E_ID de chacune des étiquettes 5 lues, associé aux données contenues dans l'étiquette 5 en question, et une date de lecture, ou "estampille", TS.

Dans une réalisation avantageuse, chaque étiquette 5 maintient dans une unique zone mémoire une juxtaposition des différentes données requises sous la forme d'un identifiant individuel E_ID, c'est-à-dire des données d'appartenance à un objet agrégé 1 et, le cas échéant des données de description de groupe. Typiquement, cette zone mémoire stocke une chaîne de caractères alphanumériques constituée par la juxtaposition d'une partie d'identifiant individuel E_ID, propre à identifier l'étiquette 5 dans l'objet agrégé 1, de l'identifiant d'objet O_ID, et, le cas échéant, de la définition d'attribut d'étiquette maîtresse, et/ou du cardinal d'objet O_NB. Dans ce cas, la structure du fichier journal, et plus généralement la table d'enregistrement, se trouve simplifiée en ce qu'elle comporte uniquement une liste d'identifiants individuels E_ID, et éventuellement des dates de lecture TS associées.

Le contrôleur 15 est en outre agencé de manière à exécuter une fonction de contrôle d'objet VAL capable de coopérer avec la mémoire du contrôleur 15 pour lire le contenu de la table d'enregistrement 17 et déterminer l'intégrité d'un ou plusieurs objets agrégés 1 à partir des données mémorisées dans cette table.

Selon un premier mode de réalisation, la fonction LECT et le lecteur d'étiquettes 13 sont conjointement agencés de manière à lire des étiquettes 5 en séquence. La table d'enregistrement prend ici la forme d'un fichier journal rassemblant les identifiants individuels E_ID des étiquettes 5 lues, les données associées à ces identifiants individuels E_ID, et les dates de lecture TS des étiquettes 5.

Dans ce mode de réalisation, un délai temporel DT est imposé pour le passage des étiquettes 5 constituant un même objet agrégé 1. Autrement dit, un objet agrégé 1 est ici intègre si l'ensemble des étiquettes 5 qui le constitue est lu dans le délai temporel DT.

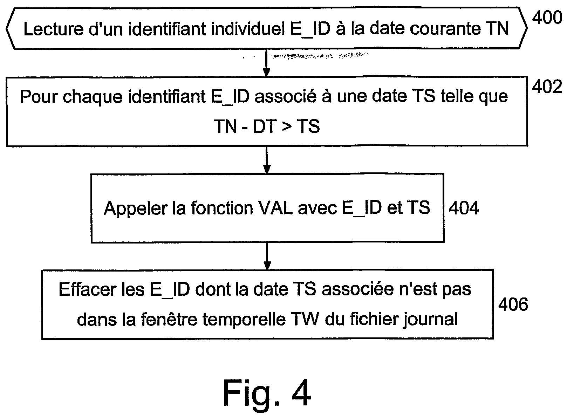

La figure 4 illustre le fonctionnement du contrôleur 15 dans ce mode de réalisation.

En une étape 400, la fonction LECT et le lecteur d'étiquettes 13 coopèrent pour lire une étiquette 5 particulière, repérée grâce à son identifiant individuel E_ID. Une date de lecture TS, qui vaut la date courante TN, est associée aux données extraites de cette étiquette.

En une étape 402, le contrôleur 15 est agencé de manière à appeler la fonction VAL avec chacun des identifiants individuels E_ID contenus dans le fichier journal dont la date de lecture TS est plus ancienne que la date définie par la date actuelle TN moins le délai temporel DT.

En option, le contrôleur 15 peut être agencé de manière à supprimer du fichier journal les enregistrements trop anciens. Par exemple, les identifiants E_ID dont la date de lecture TS associée est plus ancienne qu'une valeur de fenêtre temporelle TW fixée pour le fichier journal sont effacés au cours d'une étape 404.

En pratique, une liste rassemblant les identifiants d'objet O_ID d'objets agrégés 1 en cours de vérification, ou dont la vérification est programmée, peut être maintenue en plus du fichier journal. Si l'identifiant d'objet O_ID de l'étiquette qui vient d'être lue et inscrite dans le fichier journal est absent de cette liste, c'est-à-dire si l'objet agrégé 1 correspondant à cette étiquette n'est pas en cours de vérification, cet identifiant d'objet O_ID est inscrit et un appel de la fonction de VAL est programmé à une date valant la date de lecture TS à laquelle est ajouté le délai temporel DT. Sinon, la programmation de l'objet est déjà prévue.

Les annexes A.1.1 et A.1.2 montrent un extrait de programme informatique écrit en pseudo-code informatique pouvant être utilisé dans cet exemple de réalisation. En particulier, l'annexe A.1.2 montre de manière générique une procédure *prog_check* destinée à programmer un appel de la fonction de VAL à une date entrée comme paramètre ("date_trigger").

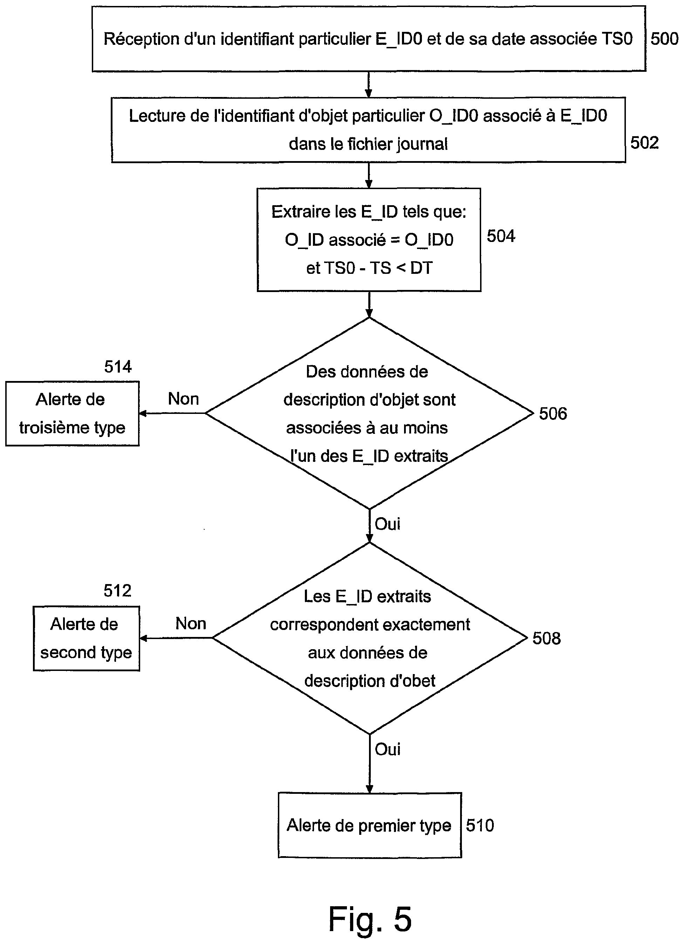

La figure 5 illustre la fonction VAL dans ce mode de réalisation. Et l'annexe A.1.3 montre à titre d'exemple un programme écrit en pseudo-code pouvant être utilisé pour la mise en oeuvre de cette fonction VAL.

En une étape 500, la fonction VAL reçoit un identifiant individuel E_ID particulier, noté E_ID0, et la date de lecture TS associée à cet identifiant individuel particulier dans le fichier journal, notée TS0.

En une étape 502, la fonction VAL lit l'identifiant d'objet particulier O_IDO associé à l'identifiant E_ID0 dans le fichier journal. Cette étape peut dans certaines variantes de réalisation être optionnelle, en particulier lorsque la fonction VAL est appelée avec l'identifiant d'objet particulier O_ID0, ou lorsque cet identifiant est compris d'une manière ou d'une autre dans l'identifiant individuel particulier E_ID0.

En une étape 504, la fonction VAL extrait un sous-ensemble du fichier journal constitué des identifiant individuels E_ID associés à l'identifiant d'objet particulier O_ID0 et dont la date de lecture TS n'est pas éloignée de la date de lecture particulière TS0 de plus que le délai temporel DT, c'est-à-dire telle que le délai TS0 moins TS soit inférieur à DT.

En une étape 506, la fonction VAL vérifie que le sous-ensemble en question contient des données de description d'objet, par exemple des données de cardinal d'objet O_NB.

Si oui, alors la fonction VAL vérifie que les identifiants individuels E_ID du sous-ensemble correspondent exactement aux données de description d'objet, dans une étape 508. Par exemple, la fonction VAL réalise un compte de ces identifiants individuels E_ID, puis compare ce compte aux données de cardinal d'objet O_NB. Toujours en exemple, les données de description comprennent une liste d'identifiants individuels E_ID et la fonction VAL compare cette liste aux identifiants individuels du sous-ensemble extrait du fichier journal.

Si le résultat de l'étape 508 est positif, alors la fonction VAL délivre une alerte d'un premier type, signifiant que l'objet agrégé 1 repéré par l'identifiant d'objet particulier O_ID0 est intègre (étape 510).

Si le résultat de l'étape 508 est négatif, alors la fonction VAL délivre une alerte d'un second type, signifiant que l'objet agrégé 1 repéré par l'identifiant d'objet particulier O_ID0 est partiellement intègre (étape 512). Par "partiellement intègre", on entend que certaines des étiquettes 5 constituant l'objet agrégé 1 sont absentes du volume donné 11, mais que l'étiquette maîtresse est présente dans ce volume.

Dans le cas où le résultat de l'étape 506 est négatif, la fonction VAL délivre une alerte d'un troisième type, signifiant que l'objet agrégé 1 est indéfini. Par "indéfini", on entend ici qu'il n'existe pas de données de description de l'objet agrégé 1 suffisantes pour permettre de juger de son intégrité.

Ce premier mode de réalisation de l'invention est particulièrement adapté au cas où le lecteur d'étiquettes 13 prend la forme d'un portique de détection, capable de lire des étiquettes 5 qui le traverse. Typiquement, un lecteur de ce type lit les étiquettes 5 de manière séquentielle.

Un tel lecteur peut être disposé en l'unique entrée/sortie d'un volume donné 11. Dans ce cas, le dispositif 9 fourni un contrôle de ce volume 11.

Plus généralement, un tel lecteur permet un contrôle d'entrée ou de sortie du volume donné 11.

Le lecteur d'étiquettes 13 n'est cependant pas limité à un lecteur de type portique, et peut prendre d'autres formes telles que, par exemple, un scanner à main à l'aide duquel un utilisateur vient lire chacune d'un ensemble d'étiquettes.

Ce premier mode de réalisation peut être simplifié dans le cas où il est certain, ou du moins très probable, que les étiquettes lues dans un intervalle de temps donné appartiennent à un même objet agrégé 1. Dans ce cas, l'extraction des identifiants individuels E_ID de l'étape 506 se fait uniquement en fonction des dates de lecture TS. En outre, il n'est pas nécessaire de lire l'identifiant d'objet O_ID au cours de l'étape 504. L'organisation de l'exploitation du dispositif 9 peut faire en sorte qu'un tel cas de figure se produise. Par exemple, un agent humain peut s'assurer que les étiquettes lues dans l'intervalle de temps appartiennent bien à un même objet agrégé 1.

Selon un second mode de réalisation, la fonction LECT et le lecteur d'étiquettes 13 sont conjointement agencés de manière à lire des étiquettes 5 en séquence et à déterminer un sens de déplacement de l'étiquette lue. Par exemple, le lecteur d'étiquettes 13 se présente sous la forme d'un portique à au moins deux antennes, le sens de déplacement d'une étiquette 5 étant alors déterminé en sachant laquelle des deux antennes a la première lu l'étiquette 5 en question. Le lecteur d'étiquettes 13 peut aussi présenter une unique antenne et être muni d'un dispositif supplémentaire de détection de sens de déplacement, par exemple de type radar, capable d'établir si une étiquette s'éloigne ou se rapproche.

Aux fins de description, on considère que le lecteur d'étiquettes 15 et la fonction LECT sont capables ici de déterminer deux directions de déplacement opposées, respectivement notées AB et BA.

La table d'enregistrement prend ici la forme de deux fichiers journaux rassemblant les identifiants individuels E_ID des étiquettes 5 lues, les données associées à ces identifiants individuels E_ID, et les dates de lecture TS des étiquettes 5. L'un des fichiers journaux maintient les identifiants individuels E_ID d'étiquettes 5 lues comme se déplaçant dans le sens AB, tandis que l'autre fichier journal maintient les identifiants individuel E_ID d'étiquettes 5 lues comme se déplaçant dans le sens BA.

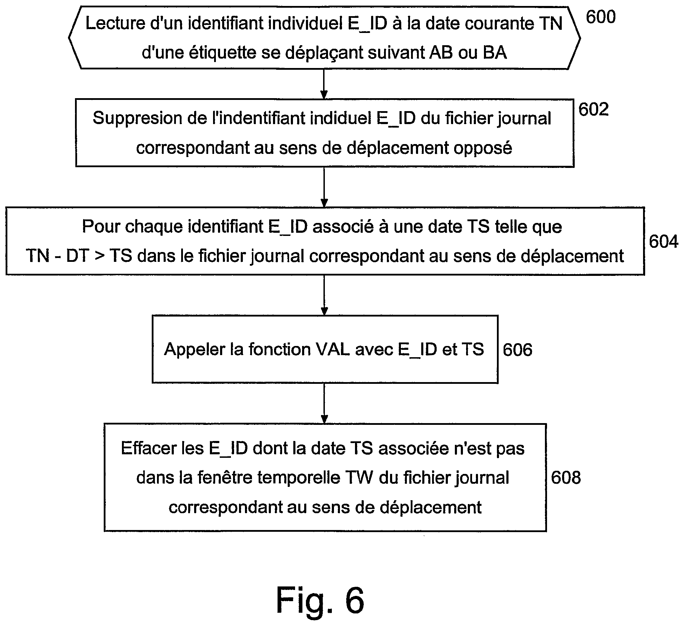

La figure 6 illustre le fonctionnement du contrôleur 15 dans ce mode de réalisation. Et l'annexe 2 montre un extrait de programme informatique écrit pseudo-code informatique pouvant être utilisé pour la réalisation d'une partie de ce contrôleur 15.

En une étape 600, la fonction LECT et le lecteur d'étiquettes 13 coopèrent pour lire une étiquette 5 particulière, laquelle se déplace suivant l'un des sens AB et BA. Cette étiquette 5 particulière est repérée grâce à son identifiant individuel E_ID. Une date de lecture TS, qui vaut la date courante TN, est associée à l'identifiant individuel E_ID dans le fichier journal correspondant au sens de déplacement de l'étiquette 5 particulière.

En une étape 602, le contrôleur est agencé de manière à effacer l'identifiant individuel E_ID de l'étiquette 5 lue du fichier journal correspondant au sens de déplacement opposé au sens de déplacement de cette étiquette, dans le cas où le fichier journal en question contient cet identifiant.

En une étape 604, le contrôleur 15 est agencé de manière à appeler la fonction VAL avec chacun des identifiants individuels E_ID contenus dans le fichier journal correspondant au sens de déplacement de l'étiquette 5 particulière dont la date de lecture TS est plus ancienne que la date définie par la date actuelle TN moins le délai temporel DT.

En option, le contrôleur 15 peut être agencé de manière à supprimer du fichier journal correspondant au sens de déplacement de l'étiquette 5 particulière les enregistrements trop anciens. Par exemple, les identifiants E_ID dont la date de lecture TS associée est plus ancienne que la valeur de fenêtre temporelle TW fixée pour le fichier journal sont effacés au cours d'une étape 606.

Dans ce second mode de réalisation, la fonction VAL peut être agencée de manière analogue à la fonction VAL du premier mode de réalisation, à l'exception que l'intégrité d'un objet agrégé 1 est vérifiée pour le fichier journal correspondant au sens de déplacement de l'étiquette 5 particulière. Autrement dit, les identifiants individuels E_ID extraits à l'étape 504 sont extraits du fichier journal correspondant au sens de déplacement de l'étiquette 5.

En pratique, comme pour le premier mode de réalisation, une liste supplémentaire peut être maintenue, laquelle rassemble les identifiants d'objets O_ID des objets agrégés 1 dont la vérification est en cours ou programmée. Les annexes A.2.1, A.2.2 et A.2.3 utilisent une telle liste supplémentaire pour chacun des sens de déplacement AB et BA.

Dans ce mode de réalisation, le lecteur d'étiquettes 13 peut être disposé en l'unique accès d'un volume donné 11, de manière à réaliser un contrôle d'entrée/sortie du volume 11.

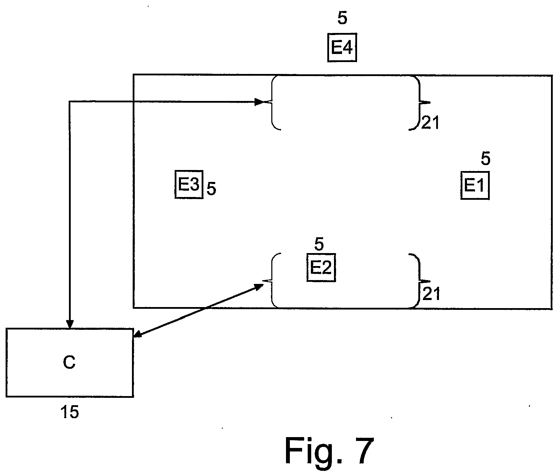

Le dispositif de surveillance 9 peut également comprendre plusieurs lecteurs d'étiquettes 13 placés en différents points d'un volume donné 11, et reliés à un même contrôleur 15. Dans ce cas, les différents lecteurs d'étiquettes 13 peuvent être disposés en des points d'accès physique au volume 11 de manière à fournir un contrôle périmétrique de ce volume. Sur la figure 7, un lecteur d'étiquettes 13 est disposé en chaque accès physique du volume 11 en sorte que toute étiquette 5 entrant ou sortant du volume 11 est lue. Dans ce cas, le lecteur d'étiquettes 13 prend avantageusement la forme d'un portique de lecture 21, capable de lire des étiquettes 5 se présentant devant lui. Pour un appartement d'habitation par exemple, un lecteur d'étiquettes 13 peut être disposé en chacune des portes donnant sur l'extérieur de l'appartement.

Comme le dispositif de surveillance 9 tient compte, dans ce mode de réalisation, du sens de déplacement des étiquettes 5, il peut être employé de manière à surveiller un volume donné 11 quant à l'intégrité d'un ou plusieurs objets agrégés 1. Dans ce cas, les lecteurs d'étiquettes 13 sont agencés de manière que les sens de déplacement AB et BA correspondent à des mouvements d'entrée dans le volume donné 11 et de sortie de celui-ci, respectivement. L'intégrité d'un objet agrégé 1 étant vérifiée à l'entrée dans le volume, et en sortie de celui-ci, cette intégrité est vérifiée à l'intérieur du volume donné 11, à condition qu'un lecteur d'étiquettes 13 soit disposé en chaque point d'accès au volume 11.

Le dispositif de surveillance 9 des premier et second modes de réalisation met en oeuvre une lecture séquentielle des étiquettes 5. Ces modes de réalisation sont avantageux en ce qu'ils permettent, entre autres choses, de réaliser un contrôle des entrées et des sorties d'un volume donnée 11. Ceci permet de surveiller l'ensemble d'un volume donné 11 à de faibles coûts de déploiement : il suffit d'agencer le ou les lecteurs en chaque accès physique au volume 11.

La lecture séquentielle des étiquettes 5 permet également de conserver une certaine liberté temporelle dans le contrôle de l'intégrité d'un objet agrégé 1. Il n'est pas nécessaire en effet que l'ensemble des étiquettes 5 constituant un objet agrégé 1 soit lu de manière simultanée en un lieu particulier du volume donné 11. À la place, il suffit que l'ensemble de ces étiquettes 5 passe par ce lieu particulier dans un intervalle de temps fixé.

Pour certaines applications cependant, une lecture quasi simultanée de l'ensemble des étiquettes 5 présentes dans un volume donné 11 peut être privilégiée. Ce peut être le cas, notamment, lorsque ce volume donné 11 présente de faibles dimensions, par exemple lorsqu'on souhaite, ou que l'on peut, restreindre le contrôle à un tel volume. Par exemple, une cabine de contrôle peut être mise à disposition, dans laquelle un utilisateur dispose un ensemble d'étiquettes 5 pour vérifier l'intégrité d'un objet agrégé 1 constitué par ces étiquettes.

Lorsqu'une lecture des différentes étiquettes 5 présentes dans un volume donné 11 peut être mise en place, la table d'enregistrement peut être réalisée plus simplement encore, puisqu'il n'est pas nécessaire de mémoriser de date de lecture.

Le contrôleur 15 peut être agencé de manière analogue au premier mode de réalisation, à l'exception qu'il n'est pas nécessaire de tenir compte des différentes dates de lecture TS. Ceci peut néanmoins être fait, à titre d'option.

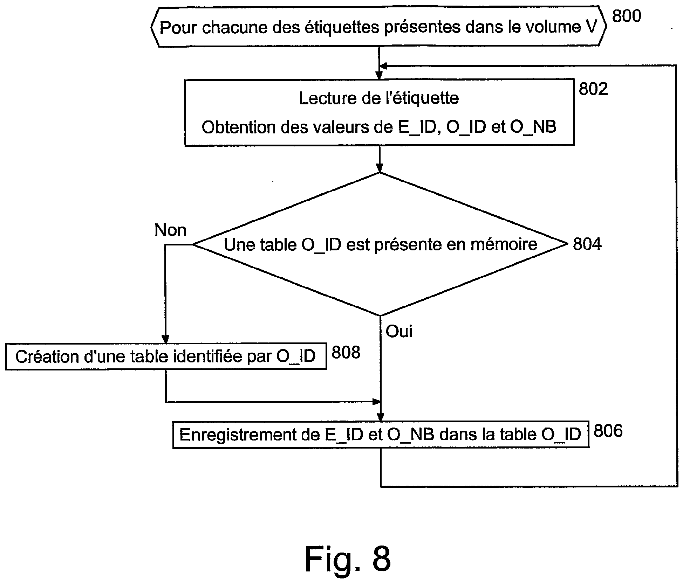

La figure 8 illustre une autre variante de réalisation de la fonction LECT dans le cas d'une lecture volumique des étiquettes 5.

Dans une étape 800, la fonction LECT initialise une boucle qui porte sur l'ensemble des étiquettes 5 situées dans la portée du lecteur d'étiquettes 13.

Dans une étape 802, la fonction LECT coopère avec ce lecteur d'étiquettes 13 pour acquérir les données mémorisées dans l'étiquette 5 en cours de lecture. La fonction LECT est capable de distinguer parmi ces données reçues un identifiant individuel E_ID, un identifiant d'objet O_ID, et, le cas échéant, un cardinal d'objet O_NB, et plus généralement, les données d'identification individuelle, de description d'objet et, le cas échéant, d'appartenance à un objet.

Dans une étape 804, la fonction LECT coopère avec la mémoire du contrôleur 15 pour écrire une table d'enregistrement rassemblant de manière ordonnée les données acquises. Par exemple, la table d'enregistrement prend la forme d'un tableau à une entrée, celle-ci rassemblant les identifiants individuels des étiquettes lues. Chaque donnée associée dans une étiquette 5 à un identifiant individuel E_ID est en outre mémorisée dans la table, en regard de l'identifiant individuel en question.

En pratique, une telle table d'objet pourra être identifiée sur la base de la valeur des données d'identification d'objet O_ID.

Si tel est cas, alors la fonction LECT remplit la table avec la valeur de l'identifiant individuel E_ID compris dans les données reçues à l'étape 802 (étape 806). Dans le cas où ces données contiennent un cardinal d'objet O_NB, la valeur de celui-ci est également mémorisée dans la table. Plus généralement, les données de description d'objet sont également mémorisées dans cette table d'objet.

Si la valeur de l'identifiant E_ID existe déjà dans la table de l'objet O_ID, la fonction LECT est recommencée à l'étape 802 sans inscription supplémentaire dans cette table.

Si le test de l'étape 804 est négatif, alors la fonction LECT est capable de coopérer avec la mémoire du contrôleur 15 pour créer une table d'enregistrement identifiée sur la base des données d'identification d'objet O_ID, au cours d'une étape 808, et se poursuit par l'étape 806.

À l'issue de l'étape 806, la fonction LECT est réexécutée à partir de l'étape 802 pour lecture d'une nouvelle étiquette 5.

L'exécution de la fonction LECT peut débuter par une opération de suppression de l'ensemble des tables d'objet de la mémoire du contrôleur 15, en sorte que l'état de la mémoire correspond toujours aux étiquettes 5 présentes dans la portée du ou des lecteurs d'étiquettes 13 lors de l'exécution de cette fonction LECT.

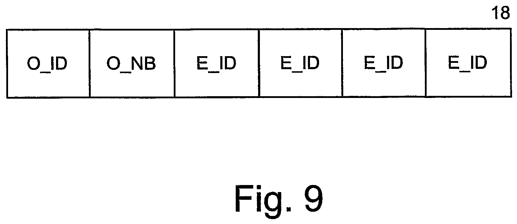

La figure 9 montre schématiquement une table d'enregistrement 17 pour une valeur de l'identifiant d'objet O_ID. Cette table 17 maintient en relation une valeur d'un identifiant d'objet O_ID, une valeur d'un cardinal d'objet O_NB et des valeurs d'identifiants individuels E_ID d'étiquettes 5.

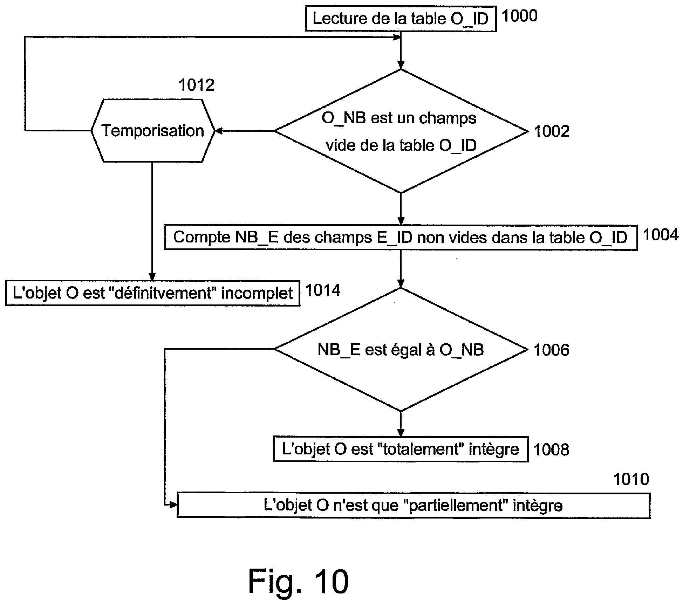

La figure 10 illustre une variante de réalisation de la fonction VAL dans le cas où une lecture volumique des étiquettes 15 peut être mise en oeuvre.

Dans une étape 1000, la fonction VAL effectue une lecture de la table d'enregistrement associée à un objet particulier O_ID.

Dans une étape 1002, la fonction VAL vérifie si un enregistrement correspondant au cardinal de l'objet O_NB existe.

Si oui, alors la fonction VAL réalise un compte NB_E des enregistrements non vides correspondant à des valeurs d'identifiants individuels E_ID (étape 1004).

Dans une étape 1006, la fonction VAL vérifie si le compte NB_E est égal à la valeur du cardinal d'objet O_NB.

Si oui, alors la fonction VAL délivre une alerte de premier type indiquant un objet intègre (étape 1008).

Si le test de l'étape 1006 est négatif, alors la fonction VAL délivre une alerte de second type indiquant une intégrité partielle. (étape 1010).

Si le test de l'étape 1002 est négatif, alors la fonction VAL met en oeuvre une étape 1012 de temporisation.

Dans le cas où le test de l'étape 1002 est à nouveau négatif, la fonction VAL retourne une alerte de troisième type indiquant un objet agrégé indéfini.

Le contrôleur 15 est avantageusement agencé de manière à exécuter la fonction VAL régulièrement.

Le ou les lecteurs d'étiquettes 13 sont de préférence répartis de manière que toute étiquette 5 présente à l'intérieur du volume 11 soit lue.

Le ou les lecteurs d'étiquettes 13 peuvent être répartis de manière à couvrir l'ensemble du volume 11. Dans ce cas, chacun des lecteurs d'étiquettes 13 peut prendre la forme d'une antenne multidirectionnelle, comme représenté sur la figure 1.

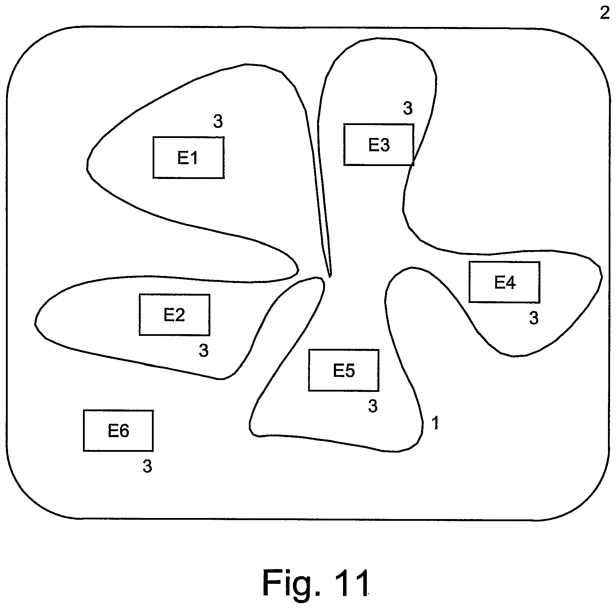

La figure 11 montre un développement de l'invention.

L'objet agrégé 1, ou premier objet agrégé 1, est constitué des objets élémentaires E1, E2, E3, E4 et E5, tandis qu'un second objet agrégé 2 est constitué de chacun des objets élémentaires E1 à E6. Autrement dit, le second objet agrégé 2 est constitué du premier objet agrégé 1 et de l'objet élémentaire E6.

Chacun des objets élémentaires E1 à E6 prend la forme d'une variante de l'étiquette 5, désignée étiquette 5A. Chacune des étiquettes 5A constitutives du premier objet agrégé 1 ou du second objet agrégé 2 maintient en mémoire des données d'identification qui lui sont propres, par exemple des données d'identifiant élémentaire E_ID.

Des données de description de premier objet agrégé 1 sont mémorisées dans certaines au moins des étiquettes 5A correspondant aux objets élémentaires E1 à E5. Des données de description de second obj et agrégé 2 sont mémorisées dans certaines au moins des étiquettes 5A correspondant aux objets élémentaires E1 à E6. L'intégrité de chacun des premier objet agrégé 1 et second objet agrégé 2 peut ainsi être vérifiée à partir des données de description respectives et des données d'identifiants individuels des étiquettes 5A.

Par exemple, chacune des étiquettes E1 à E5 maintient des données d'identification de premier objet O1_ID et des données d'identifiant de second objet O2_ID. Et l'étiquette E6 maintient des données d'identifiant de second objet O2_ID seulement. Les données d'identification de premier objet O1_ID comprennent une description de ce premier objet agrégé 1, par exemple sous la forme d'une empreinte de cet objet. Les données d'identification de second objet O2_ID comprennent une description de ce second objet agrégé 2, par exemple sous la forme d'une empreinte de cet objet.

L'annexe A3 montre un algorithme, écrit en pseudo-code, destiné à vérifier l'intégrité du premier objet agrégé 1 et du second objet agrégé 2. Cet algorithme, qui n'est décrit qu'à titre d'exemple, suppose que chacune des étiquettes 5A constituant à la fois le premier objet agrégé 1 et le second objet agrégé 2 maintienne des données d'identifiant de premier objet O1_ID et des données d'identification de second objet O2_ID.

Le code "gid" désigne l'empreinte du premier objet agrégé 1, tandis que le code "gid2" désigne l'empreinte du second objet agrégé 2. L'algorithme de l'annexe 3 diffère de celui de l'annexe 1 par la procédure de vérification d'intégrité d'un objet agrégé, c'est-à-dire par la programmation de la procédure "check" décrite en A.3.3. L'objet vérifié est l'objet "id0.gid", qui peut être soit le premier objet agrégé 1 soit le second objet agrégé 2. La vérification de l'intégrité du premier objet agrégé 1 est réalisée en constituant un objet "group" rassemblant les identifiants, "id", dont les données d'identification de premier objet "id.gid" correspondent. La vérification de l'intégrité du second objet agrégé 2 est réalisée en vérifiant l'intégrité du premier objet agrégé 1 et en ajoutant au "group" du premier objet agrégé 1 les identifiants "id" dont les données d'identification de second objet agrégé 2, "id.gid2" correspondent. En d'autres termes, l'algorithme de l'annexe 3 tire parti de l'inclusion du premier objet agrégé 1 dans le second objet agrégé 2 pour simplifier le traitement de vérification.

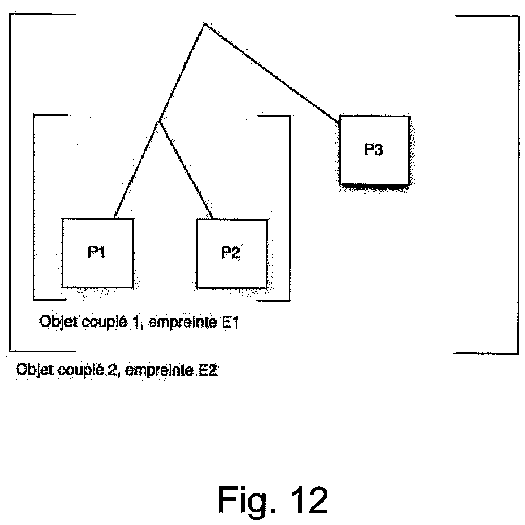

Comme illustré sur la figure 12, un objet agrégé peut, de manière plus générale, inclure un ou plusieurs objets agrégés différents. Il suffit à chaque fois que l'une au moins des étiquettes constituant un objet agrégé maintienne des données de description de cet objet. Ainsi, il est possible de créer une structure arborescente d'objets agrégés. Par exemple, ces données d'identification d'objet peuvent être stockées dans chacune des étiquettes constituant un objet agrégé particulier, sous la forme d'une empreinte de cet objet.

Par exemple, le second objet agrégé 2 est constitué de l'objet physique P3 et du premier objet agrégé 1, lequel est lui même constitué des objets physiques P1 et P2.

Le premier objet agrégé 1 peut être défini par des données de description d'objet. Par exemple, ces données peuvent prendre la forme d'un identifiant de premier objet 01_ID sous la forme d'une empreinte, ou première empreinte, c'est-à-dire de données décrivant la constitution du premier objet agrégé 1. Cet identifiant de premier objet 01_ID peut être stocké dans chacune des étiquettes constitutives du premier objet agrégé 1 ou seulement dans certaines d'entre elles.

Cette empreinte peut simplement résulter de la concaténation des données d'identifiant élémentaire E_ID de chacune des étiquettes constitutives du premier objet agrégé 1. Dans des réalisations plus élaborées, la première empreinte peut résulter de l'application d'une fonction hashage à l'ensemble de ces données d'identifiants élémentaires E_ID.

De même, le second objet agrégé 2 peut être défini par des données de description d'objet qui peuvent prendre la forme d'un identifiant de second objet 02_ID réalisé sous la forme d'une seconde empreinte E2 de cet objet.

Par exemple, chacune des étiquettes 5A à apposer sur l'objet physique P1et sur l'objet physique P2 contient la première empreinte E1, ou empreinte primaire, et la seconde empreinte E2, ou empreinte secondaire.

Plus généralement, une empreinte primaire correspondra à l'empreinte de l'objet agrégé de plus haut niveau, ou niveau N, dans l'arbre, tandis que l'empreinte secondaire correspondra à l'empreinte de l'objet agrégé de niveau N-1 auquel appartient l'objet physique sur lequel sera apposée l'étiquette. Ceci implique que l'empreinte secondaire des étiquettes 5A destinées à des objets physiques à la racine de l'arbre sera vide ou nulle.

L'intégrité du premier objet agrégé 1 et du second objet agrégé 2 peut être testée en réalisant deux traitements de vérification, sur l'un et l'autre du premier objet agrégé 1 et du second objet agrégé 2.

L'inclusion d'un objet agrégé dans un autre est très intéressante en ce qu'elle permet de créer une structure arborescente. Cependant, il s'agit là d'une réalisation particulière, et d'autres agencements mutuels d'objets agrégés peuvent être mis en oeuvre, en fonction de l'application envisagée.

Par exemple, le premier objet agrégé 1 et le second objet agrégé 2 peuvent être partiellement réunis. Le second objet agrégé 2 pourrait ainsi comprendre les étiquettes E2, E5 et E6 uniquement.

L'annexe A4 montre un algorithme, écrit en pseudo-code, destiné à vérifier l'intégrité d'un premier objet agrégé 1 et d'un second objet agrégé 2, dans le cas où le premier objet agrégé 1 n'est pas totalement inclus dans l'objet agrégé 2. L'algorithme de cette annexe 4 suppose que chacune des étiquettes 5A comprises à la fois dans le premier obj et agrégé 1 et le second objet agrégé 2 maintienne un identifiant de premier objet agrégé O1_ID, désigné "gid" dans cette annexe, et un identifiant de second objet agrégé O2_ID, désigné "gid2". Cet algorithme prend en compte un délai maximal, désigné "delta_trans", pour que soient lues l'ensemble des étiquettes 5A constitutives d'un objet agrégé (c'est-à-dire que cet objet ne peut être intègre que si l'ensemble de ses étiquettes sont lues dans ce délai). Il ne s'agit là que d'une option, et, comme vu plus haut, cette condition supplémentaire d'intégrité peut être omise, en particulier lorsque lecture volumique des étiquettes est mise en oeuvre.

À la différence de l'algorithme de l'annexe 3, l'algorithme de l'annexe 4 ne peut tirer parti de l'inclusion du premier objet agrégé 1 dans le second objet agrégé 2. En A.4.3, on crée donc un groupe "group" constitué des identifiants dont les données d'identifiant de premier objet "id.gid" ou les données d'identifiant de second objet "id.gid2" correspondent à l'identifiant de l'objet vérifié, c'est-à-dire "id0.gid". La procédure "Check_Group" est ensuite appelée pour vérifier la concordance de ce groupe aux données de description de l'objet vérifié (A.4.4).

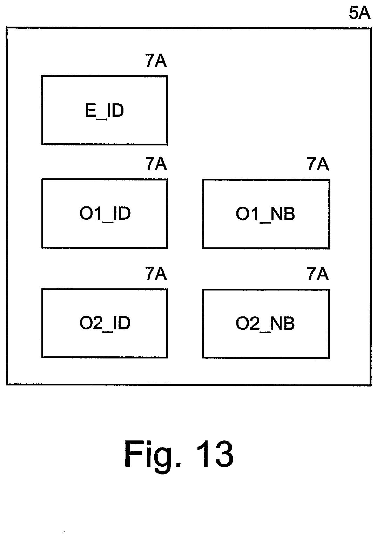

La figure 13 illustre un exemple d'étiquette 5A en tant que variante de l'étiquette 5.

Chaque étiquette 5A maintient, en une ou plusieurs zones mémoires 7A des données d'identifiant élémentaire E_ID, propres à l'étiquette 5A en question, des données d'identifiant de premier objet agrégé O1_ID, communes à l'ensemble des étiquettes 5A constitutives de l'objet agrégé 1. En option, chaque étiquette 5A maintient en outre, dans ces zones mémoires 7A, des données de cardinal de premier objet O1_NB, indiquant le nombre d'étiquettes 5A constitutives de l'objet agrégé 1.

Dans ces zones mémoires 7A, ou dans des zones mémoires supplémentaires, l'étiquette 5A maintient encore des données d'identifiant de second objet 02_ID, communes à chacune des étiquettes 5A constitutives d'un second objet agrégé 2. En option, des données de cardinal de second objet O2_NB, indiquant le nombre d'étiquettes 5A constitutives de ce second objet agrégé 2 sont également maintenues dans ces zones mémoires 7A.

Les données de cardinal de premier objet O1_NB et de second objet 02_NB sont optionnelles. Les données d'identifiant de premier objet O1_ID et de second objet O2_ID peuvent implicitement, ou explicitement, comprendre une description des premier 1 et second 2 objets agrégés en eux-mêmes. C'est le cas notamment lorsque ces données prennent la forme d'empreintes, comme vu plus haut.

Par exemple, les données d'identifiant de premier objet O1_ID peuvent consister en le résultat d'une fonction de hashage générée à partir des données d'identifiant élémentaires E_ID de chacune des étiquettes constitutives du premier objet agrégé 1. De même, en supplément et/ou en remplacement, les données d'identifiant de second objet O2_ID peuvent consister en le résultat d'une fonction de hashage générée à partir des données d'identifiant élémentaires E_ID de chacune des étiquettes constitutives du second objet agrégé 2.

Dans une variante avantageuse, les données d'identifiant de second objet O2_ID peuvent comprendre le résultat d'une fonction de hashage générée à partir des données d'identifiant de premier objet O1_ID et des données d'identifiant élémentaires E_ID de chacune des étiquettes élémentaires appartenant au second objet agrégé 2 et n'appartenant pas au premier objet agrégé 1.

Dans une variante particulièrement avantageuse, les données d'identifiant d'objet O_ID sont constituées du résultat d'une fonction de hashage générée à partir des données d'identifiant élémentaires E_ID de chacune des étiquettes constituant l'objet agrégé 1 et d'une donnée de type clé publique PUB_ID, ou similaire. Dans cette réalisation, l'intégrité de l'objet agrégé 1 ne peut être vérifiée que si des données de clé privée PVT_ID, cohérentes les données de clé publique, sont à la disposition de la fonction VAL.

Autrement dit, les données de clé publique PUB_ID servent uniquement à la génération des données d'identifiant d'objet O_ID, tandis que les données de clé privée PVT_ID sont utilisées pour la vérification de l'intégrité de l'objet agrégé 1.

Les données de clé publique PUB_ID peuvent être intégrée dans la fonction CREATION décrite plus haut pour la génération des données d'identifiant d'objet O_ID. Ceci permet d'écriture les étiquettes 5A facilement, de l'une des manières décrites plus haut.

En variante, les données de clé publique PUB_ID peuvent être maintenues dans une étiquette 5A en tant que données d'identifiant élémentaire E_ID de cette étiquette. La fonction CREATION peut ainsi être appelée avec cette étiquette particulière, en supplément des autres étiquettes 5A constitutives de l'objet agrégé 1. Ceci présente l'avantage que la même fonction CREATION peut être utilisée, que l'on utilise des données de clé publique PUB_ID ou non.

Dans une autre variante encore, les données de clé publique PUB_ID peuvent être saisies pour usage par la fonction CREATION. Ceci présente l'avantage que la même fonction peut être utilisée avec plusieurs données de clé publique PUB_ID différentes, c'est-à-dire pour créer plusieurs objets agrégés différents, sans avoir à réécrire cette fonction et sans avoir à utiliser une étiquette pour stocker ces données de clé publique. Ces données de clé publique PUB_ID peuvent encore être acquises par d'autres moyens, tels que la lecture d'un code barre, la réalisation d'une image suivie d'une reconnaissance de caractères, la réception d'un message, ou autres.

Ces données de clé publique PUB_ID peuvent être vues comme identifiant un mandataire, en ce sens que ces données remplacent les données d'identifiant élémentaire E_ID d'une étiquette constitutive de l'objet agrégé lors de la création des étiquettes. Autrement dit, cela permet l'écriture des étiquettes de l'objet agrégé bien qu'une étiquette soit absente.

Les données de clé privée PVT_ID peuvent être mémorisées dans une étiquette 5 en tant que données d'identifiant élémentaire E_ID relatives à cette étiquette particulière.

En variante, les données de clé privée PVT_ID peuvent être intégrées à la fonction de vérification. Dans ce cas, l'utilisation de données de type clé publique et clé privée permet surtout d'empêcher la vérification de l'intégrité de l'objet par une autre fonction que celle qui intègre les données de clé privée PVT_ID.

Dans une autre variante encore, les données de clé privée PVT_ID peuvent être saisies ou obtenues par différents moyens, comme la lecture d'un code barre, la lecture d'un support magnétique, la lecture d'une carte à puce, la réception d'un message, la lecture d'une empreinte digitale et l'interrogation d'un serveur distant, au autres.

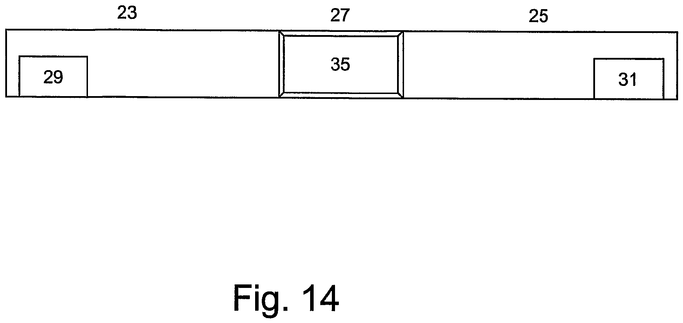

La figure 14 illustre un premier exemple d'application du dispositif de surveillance 1.

Un premier wagon de train 23 et un second wagon de train 25 sont reliés entre eux par un sas de communication 27.

Le premier wagon 23 présente une porte d'accès extérieur en laquelle est disposé un lecteur d'étiquettes à double antenne contrôlant l'accès à un premier volume à surveiller 29, tandis que le second wagon 25 présente une porte analogue, également équipée d'un lecteur d'étiquettes à double antenne pour contrôler l'accès à un second volume à surveiller 31.

Un troisième volume à surveiller 33 peut en option être associé au sas 27, dont chacun des accès au premier wagon 23 et second wagon 25 est muni d'un lecteur d'étiquettes à double antenne.

Un voyageur porte une étiquette 5 de type maîtresse. Chacun de ses bagages est doté d'une étiquette 5. L'étiquette 5 maîtresse et l'ensemble des étiquettes 5 portées par les bagages ont été programmées de manière à constituer un même objet agrégé 1.

Pour accéder au premier wagon 23, le voyageur pénètre dans le premier volume à surveiller 29. Ce faisant, l'étiquette 5 qu'il porte, ainsi que l'ensemble des étiquettes 5 portées par les bagages qui pénètrent dans le premier volume 29 sont lues par coopération du lecteur à double antenne et de la fonction LECT. La fonction VAL est appelée, par exemple consécutivement à chaque lecture d'étiquette ou de manière programmée à partir de la lecture de la première étiquette.

Si la fonction VAL retourne une indication d'objet partiellement intègre, l'alerte de second type peut être agencée de manière à signaler au voyageur l'absence de l'un de ses bagages. Cette alerte peut également être inhibée, par exemple en considérant que l'intégrité de l'objet agrégé 1 formé du voyageur et de ces bagages n'a pas à être vérifiée dans le sens de la montée dans le train. Pour cette application, le délai temporel DT est avantageusement fixé de manière que l'ensemble des bagages du voyageur puisse être monté à bord par plusieurs personnes accédant au train de manière pratiquement successive. Autrement dit, le délai temporel DT peut être fixé de manière qu'une première partie des bagages soit introduite à bord par le voyageur lui-même tandis qu'une seconde partie est introduite par une personne accompagnant le voyageur en question, telle qu'un porteur par exemple. Le délai temporel DT peut ainsi être fixé à une durée de quelques dizaines de secondes par exemple.

Si la fonction VAL retourne une indication d'objet indéfini, l'alerte de troisième type peut être agencée de manière à déclencher une alarme. Ceci signifie en effet qu'un bagage est introduit dans le train sans être accompagné de son propriétaire-voyageur. Ceci peut se produire lorsque le voyageur porte un bagage qu'il pense à tort être le sien, ou encore lorsque le porteur du bagage en question a subtilisé ce bagage à un tiers.

Si la fonction VAL indique un objet intègre, alors l'alerte de premier type peut être agencée de manière à indiquer au voyageur que l'ensemble de ses bagages a bien été monté à bord, par exemple l'allumage d'une lumière indicatrice de couleur. En option, l'alerte de premier type peut être traitée par un système de commande d'ouverture/fermeture de porte pour n'autoriser l'accès au compartiment que lorsqu'un objet intègre a été détecté.

Lorsque le voyageur, ou l'un des ses bagages, quitte le wagon 23 par le volume 29, l'étiquette 5 qu'il porte est à nouveau lue, et la fonction VAL exécutée.

Dans le cas où cette fonction VAL retourne une indication d'objet intègre, l'alerte de premier type peut être agencée de manière à indiquer au voyageur que celui-ci est bien muni de l'ensemble de ses bagages. En option, la sortie physique du volume 29 peut être interdite à défaut de présenter un objet agrégé 1 intègre.

Dans le cas où la fonction VAL retourne une indication d'objet partiellement intègre, l'alerte de second type peut être agencée de manière à indiquer au voyageur qu'un de ses bagages manque. Ceci peut être réalisé par tout moyen d'indication, tel que l'allumage d'une lumière de couleur particulière, ou encore l'activation d'un signal sonore.

Dans le cas où la fonction VAL retourne une indication d'objet indéfini, l'alerte de troisième type peut être agencée de manière à prévenir toute personne présente que la personne qui tente de faire sortir un bagage n'est pas le propriétaire-voyageur associé audit bagage. Ceci permet d'éviter les vols, mais aussi des interversions de bagages physiquement identiques.

Dans une variante de réalisation avantageuse, l'alerte de troisième type peut prendre la forme d'un signal spécifiquement destiné au propriétaire des bagages, par exemple un message envoyé sur son téléphone mobile. L'ensemble des étiquettes utilisées, ou au moins l'une d'entre elles, mémorise alors une information personnelle liée audit propriétaire, telle qu'un numéro de téléphone mobile.

De manière plus générale, toute étiquette peut maintenir une information destinée à être spécifiquement utilisée pour l'émission de l'un au moins des types d'alertes, en particulier une information de destination de cette alerte.

Le second volume 31 peut être surveillé de manière analogue au premier volume 29.

Le troisième volume 35 peut également être surveillé de façon analogue aux premier 29 et second 31 volumes pour éviter qu'un bagage soit déplacé d'un wagon à l'autre sans son propriétaire-voyageur. Dans ce cas, l'alerte de second type, émise lorsqu'un objet partiellement intègre est détecté, peut être inhibée, ce qui autorise le voyageur à se déplacer dans le train avec une partie seulement de ses bagages.

Puisque des lecteurs d'étiquettes 13 à double antenne sont ici utilisés, il est possible de traiter les alertes commandées par la fonction VAL de manière différente suivant qu'il s'agit d'un montée dans le train ou d'une descente de celui-ci. Par exemple, on peut choisir d'autoriser l'introduction d'un bagage sans son propriétaire-voyageur dans le train mais d'émettre une alarme lorsque ce bagage est déchargé sans son propriétaire. La configuration inverse peut également être mise en oeuvre, en particulier lorsqu'il est souhaitable de surveiller l'introduction d'un bagage sans propriétaire, comme c'est le cas en matière de lutte contre le terrorisme.

Le délai temporel DT est avantageusement ajusté de manière que le déclenchement des alarmes soit suffisamment rapide pour que des mesures adéquates puissent être prises tout en évitant des déclenchements intempestifs dus à l'introduction de bagages d'unmême obj et agrégé 1 par plusieurs personnes d'un même groupe.

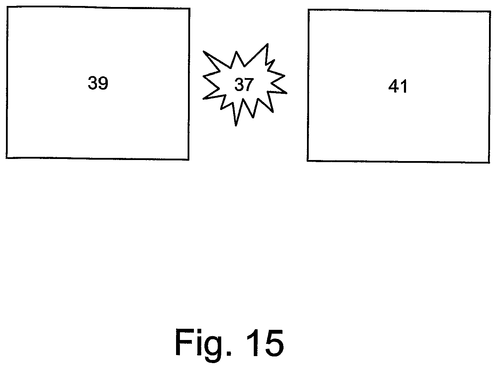

La figure 15 illustre un second exemple d'application du dispositif de surveillance 1.

Dans un aérogare, une zone de contrôle des bagages 37, classiquement par rayons X, est précédée d'un volume avant contrôle 39 et d'un volume après contrôle 41.

Un voyageur muni d'une étiquette 5 est accompagné de ses bagages étiquetés dans le volume avant contrôle 39.

La fonction CREATION est appelée pour inscrire au moins des données d'identifiant d'objet O_ID sur chacune des étiquettes 5 et des données de cardinal d'objet O_NB dans l'une au moins de ces étiquettes pour créer un objet agrégé 1. Le volume avant contrôle 39 peut prendre la forme d'une cabine dont les parois sont étanches aux ondes radios.

Le volume après contrôle 41 est surveillé grâce au dispositif 1. Par exemple, un lecteur d'étiquettes 13 est agencé dans ce volume 41 de manière qu'un franchissement du volume 41 par une étiquette 5 implique la lecture de cette étiquette. Ceci peut être réalisé au moyen d'un lecteur d'étiquettes 13 agencé sous la forme d'un portique ou d'un lecteur à antenne bi-directionnelle capable d'effectuer une lecture "volumique" du volume 41.

La fonction VAL est exécutée, par exemple consécutivement à chaque lecture d'étiquette, ou de manière programmée à partir de la lecture d'une première étiquette d'un objet agrégé 1.

Si la fonction VAL indique un objet incomplet, l'alerte de second type peut être agencée de manière à informer le voyageur que l'un de ses bagages manque.

Si la fonction VAL indique un objet indéfini, l'alerte de troisième type peut être agencée de manière à indiquer que la personne est munie d'un bagage ne lui appartenant pas. Ceci permet notamment d'identifier des substitutions de bagages entre deux propriétaires différents.

En option, la sortie du volume après contrôle 41 peut être conditionnée à l'émission d'une alerte de premier type indiquant un objet agrégé 1 intègre. Autrement dit, il peut être fait en sorte que le voyageur ne soit autorisé à quitter cette zone que s'il est muni de l'ensemble de ses bagages.

La sortie du volume après contrôle 41 peut également être surveillée de manière qu'un tiers ne quitte pas cette zone de contrôle en compagnie d'un bagage de la personne actuellement contrôlée. Des lecteurs d'étiquettes 13 de type portiques peuvent alors être disposés en chaque point de sortie physique de ce volume après contrôle 41.

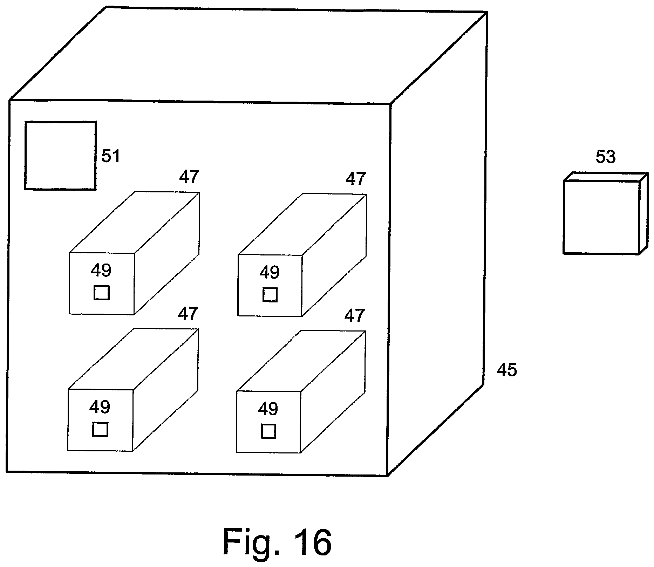

La figure 16 illustre une troisième application du dispositif de surveillance 1 selon l'invention.

Un colis 45 à faire parvenir à un destinataire comprend une pluralité d'objets physiques 47. Chacun des objets physiques 47 porte une étiquette radiofréquence, ou étiquette d'objet 49. Le colis 45 porte également une étiquette radiofréquence, ou étiquette de colis 51. L'ensemble formé du colis 45 et des objets physiques 47 forme un premier objet agrégé.

Chacune des étiquettes d'objet 49 maintient des données d'identifiants élémentaires E_ID qui lui sont propres. Les étiquettes d'objet 49 peuvent être pré-programmées avec des données d'identifiants élémentaires E_ID uniques. Dans ce cas, aucune programmation particulière n'est nécessaire pour ces étiquettes d'objet 49, lesquelles peuvent être utilisées telles que sorties d'usine.

L'étiquette de colis 51 maintient des données d'identifiant élémentaire E_ID qui lui sont propres, ainsi que des données d'identifiant de premier objet couplé O1_ID établies sur la base des données d'identifiant élémentaire E_ID de chacune des étiquettes d'objet 49 et des données d'identifiant élémentaire E_ID de l'étiquette de colis 51.

Les données d'identifiant de premier objet O1_ID prennent avantageusement la forme d'une empreinte du premier objet O1_ID. Dans ce cas, il est inutile que l'étiquette de colis 51 maintienne en plus des données de cardinal de premier objet NB1_ID.

Avantageusement, l'empreinte E1 du premier objet agrégé prend la forme du résultat d'une fonction de hashage appliquée à l'ensemble des données d'identifiant élémentaires E_ID des étiquettes d'objets 49 et de l'étiquette de colis 51.

Cette programmation de l'étiquette colis 51 est typiquement réalisée par l'expéditeur du colis 45, ou par le transporteur qui prend en charge ce colis 45.

Un second objet couplé est constitué de chacun des objets physiques 47, du colis 45 et du destinataire du colis 51.

L'étiquette de colis 51 maintient en outre des données d'identification de second objet O2_ID établies sur la base des données d'identifiants individuels E_ID des étiquettes d'objets 49, de l'étiquette de colis 51 et d'une étiquette supplémentaire, ou étiquette de destinataire 53.

De préférence, ces données d'identification de second objet O2_ID prennent la forme d'une empreinte E2.

Avantageusement, les données de description de second objet O2_ID sont réalisées à partir d'une fonction de hashage appliquée à chacune des données d'identifiant élémentaire E_ID des étiquettes d'objets 49, des données d'identifiant élémentaire E_ID de l'étiquette de colis 51 et d'une clé publique PUB_ID qui est cohérente avec des données de clé privée PVT_ID stockées dans la mémoire de l'étiquette de destinataire 53 en tant que données d'identifiant élémentaire E_ID.

L'intégrité du premier objet agrégé peut être vérifiée par la conformité des identifiants élémentaires E_ID des étiquettes d'objet 49 et de l'étiquette colis de 51 aux données de description de premier objet O1_ID stockées dans l'étiquette colis 51. Cette vérification ne nécessite aucune des données stockées dans l'étiquette de destinataire 53 et peut donc être réalisée en l'absence de l'étiquette de destinataire 53.

L'intégrité du premier objet agrégé 1 peut être vérifiée tout au long du cheminement du colis 45 par le ou les transporteurs.

La vérification de l'intégrité du premier objet agrégé 1 peut être faite avec l'un quelconque des modes de réalisation du dispositif de surveillance 1. Une lecture par portique sans gestion du délai de lecture ou une lecture volumique peuvent être ici privilégiées, étant donné que l'ensemble des étiquettes à vérifier se trouve de manière quasi certaine dans un même volume, à savoir le colis 45.

L'intégrité du second objet agrégé peut être vérifiée par la conformité des identifiants individuels E_ID des étiquettes d'objet 49, de l'étiquette de colis 51 et de l'étiquette de destinataire 53 aux données de description de second objet O2_ID.

L'intégrité du second objet agrégé ne peut être vérifiée qu'en présence de l'étiquette de destinataire 53.

De préférence, cette intégrité est vérifiée lors de la remise du colis 45 à son destinataire. L'expéditeur s'assure ainsi que le colis 45 est remis au bon destinataire, tandis que ce dernier peut vérifier l'intégrité du colis 45 qu'il reçoit, sans ouvrir ce dernier, avant d'en accepter la livraison.

Le destinataire sait ainsi que le colis 45 qu'il reçoit est identique au contenu expédié. Ceci est intéressant car le transfert de responsabilité se fait généralement à la remise par le convoyeur transporteur au destinataire, lequel accepte cette responsabilité en sachant ici que son colis est complet.

Là encore, plusieurs des modes de réalisation du dispositif de surveillance 9 peuvent être utilisés. Par exemple, une lecture volumique des étiquettes pourra être privilégiée pour ce qui concerne le colis, tandis qu'une lecture avec un scanneur à main pourra être utilisée conjointement pour lire l'étiquette du destinataire.

L'étiquette de colis 51 peut prendre une forme similaire à celle d'un timbre poste, c'est-à-dire qu'elle peut être visuellement infalsifiable et soumise au paiement des frais de poste. Elle peut, en complément ou en supplément, être agencée de manière à se casser si l'on tente de la décoller, par exemple par l'utilisation d'un adhésif adapté ou d'un système de liaison au colis irréversible.

L'application qui vient d'être décrite peut s'étendre à tout pli postal dont le conteneur, typiquement une enveloppe, porte une étiquette 5A et le contenu, typiquement une lettre, une étiquette 5.

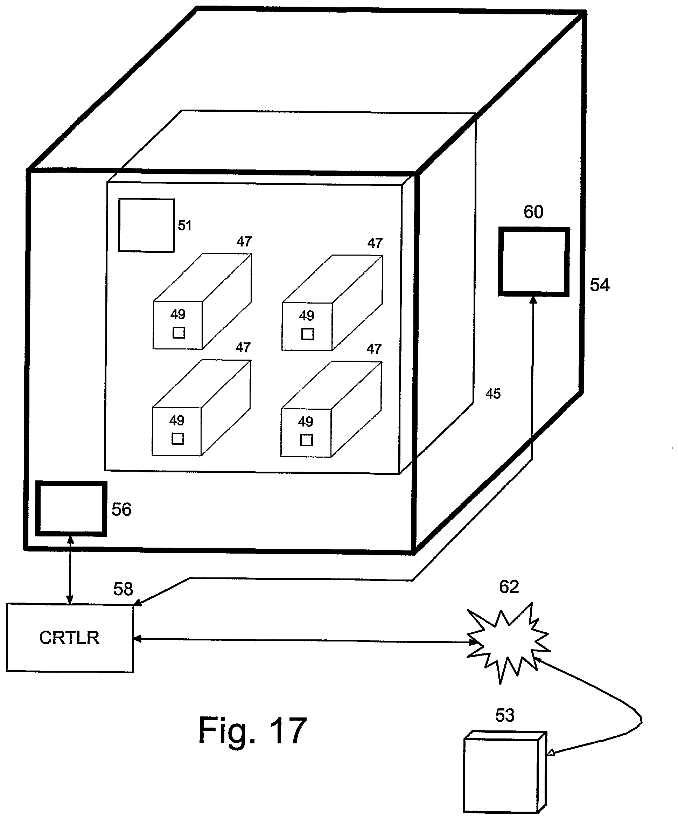

La figure 17 illustre un développement de l'application de la figure 16.

Une consigne automatique 54 est munie d'un système d'ouverture électronique 56, commandé par un contrôleur 58. Le contrôleur 58 est relié à un dispositif de lecture d'étiquettes radio-fréquence 60 agencé de manière à lire l'ensemble des étiquettes à l'intérieur de la consigne automatique 54.

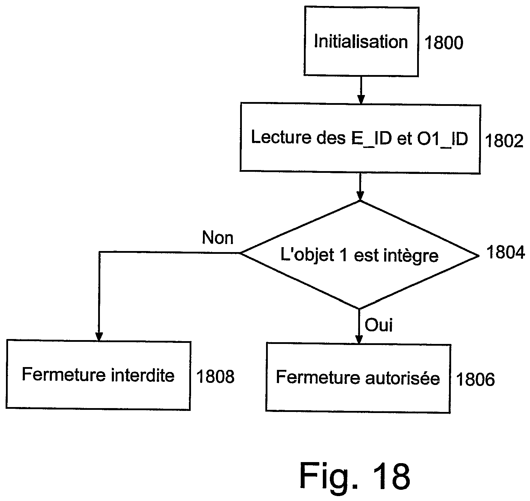

La figure 18 illustre le fonctionnement du contrôleur 58 pour le dépôt du colis 45.

Dans une étape 1800, le contrôleur interagit avec les dispositifs d'ouverture 56 pour vérifier que la consigne 54 est ouverte. Cela correspond également à une étape d'initialisation du contrôleur 58.

Dans une étape 1802, le contrôleur 58 interagit avec le dispositif de lecture 60 pour acquérir les données d'identifiant élémentaire E_ID des étiquettes placées à l'intérieur de la consigne 54, ainsi que les données d'identifiant de premier objet O1_ID.

Dans une étape 1804, le contrôleur 58 appelle une fonction de vérification d'intégrité pour le premier objet. Cette fonction vérifie la concordance des données d'identifiants élémentaires E_ID lues et des données d'identifiant de premier objet O1_ID.

S'il y a concordance, c'est-à-dire si les étiquettes disposées à l'intérieur de la consigne automatique 54 forment un objet couplé intègre, alors la fermeture de la porte est commandée dans une étape 1806.

Sinon la fermeture est interdite, dans une étape 1808.

Bien que cela ne soit pas illustré sur la figure 18, la fermeture de la consigne se trouve également interdite en l'absence de données d'identifiant de premier objet O1_ID. Ceci correspond au cas où l'étiquette de colis 51 n'a pu être lue, ce qui se produit notamment lorsque celle-ci est détériorée ou absente.

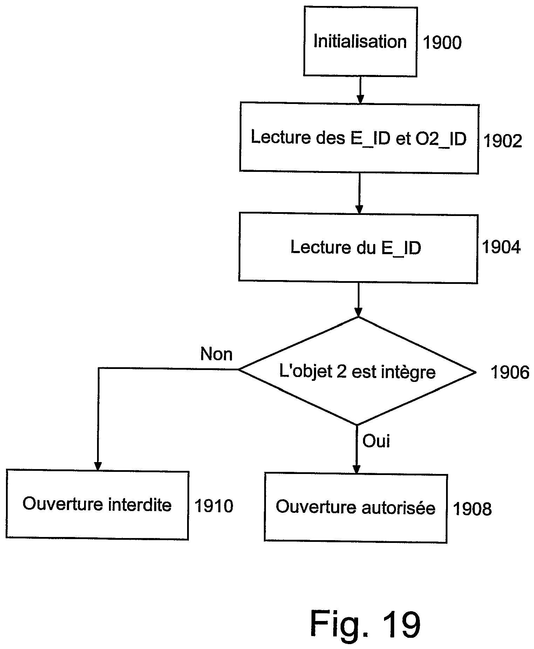

La figure 19 illustre le fonctionnement du contrôleur 58 pour le retrait du colis 45.

Dans une étape 1900, le contrôleur 58 est initialisé.

Dans une étape 1902, le contrôleur 58 interagit avec le dispositif de lecture 60 pour acquérir les données d'identifiant élémentaire E_ID des étiquettes placées à l'intérieur de la consigne 54, ainsi que les données d'identifiant de second objet O2_ID.

Dans une étape 1904, le contrôleur 58 interagit avec un lecteur d'étiquettes radio-fréquence 62, éventuellement distant, pour acquérir de l'étiquette destinataire 53 les données d'identifiant élémentaires E_ID propres à cette étiquette.

Dans une étape 1906, le contrôleur 58 appelle une fonction de vérification d'intégrité pour le second objet agrégé.

Si les données d'identifiants élémentaires E_ID forment un second objet couplé intègre, alors l'ouverture de la porte est commandée, dans une étape 1908. Sinon, la porte reste fermée.

Dans un développement de cette application, plusieurs consignes 54 peuvent être agencées à proximité les unes des autres. Le contrôleur 58 peut dans ce cas être commun à l'ensemble de ces consignes et maintenir une table d'allocation des consignes 54. Cette table d'allocation maintien un lien entre une donnée d'adresse de consigne, une donnée de statut de cette consigne susceptible de prendre les valeurs libre ou occupé, et une donnée de signature du colis 45 logé à l'intérieur de la consigne en question.

Lorsqu'un colis 45 doit être déposé en consigne, un ordre de "nouveau dépôt" est passé au contrôleur. Cet ordre peut être déclenché automatiquement à la survenance d'un événement tel que la détection de la présence d'un colis par une cellule photosensible, la lecture des étiquettes par un portique, éventuellement relié au contrôleur 58, ou autre, ou sur commande de l'utilisateur.

Le contrôleur 58 appelle une fonction de sélection de consigne, capable d'interroger la table d'allocation pour y trouver l'adresse d'une consigne dont le statut est "libre". De préférence, cette fonction de sélection est agencée de manière à élire l'une des consignes de statut 'libre" de manière aléatoire. Le contrôleur peut ensuite être agencé pour commander l'ouverture de la consigne sélectionnée et/ou pour commander l'affichage de l'adresse de cette consigne pour le déposant.

Après le dépôt du colis 45 à l'intérieur de la consigne et la fermeture de cette dernière, la première signature du colis 45 peut être inscrite dans la table d'allocation, en liaison avec la donnée d'adresse de la consigne. Cette première signature a de préférence été lue lors de l'introduction dans la consigne. En remplacement, cette signature peut être lues au moyen d'un lecteur unique, commun à l'ensemble des consignes 54. Par exemple, le contrôleur 58 peut être agencé de manière à interpréter la lecture de la signature d'un colis comme une instruction de dépôt.

Le destinataire du colis se présente auprès de l'ensemble des consignes 54, muni de sa clé privée. La lecture de cette clé privée, ou la saisie de cette dernière, commande un ordre de "retrait de colis". Le contrôleur est agencé pour tester la consistance de cette clé privée avec chacune des signatures maintenues dans la table d'allocation, afin de déterminer l'adresse de la consigne logeant le colis du destinataire. Ceci revient à tester l'intégrité de chacun des seconds objets agrégés, l'intégrité du premier objet agrégé inclus dans le second objet agrégé ayant déjà été vérifiée et sa signature mémorisée. Si l'un des seconds objets agrégés est jugé intègre, l'adresse de la consigne correspondante est renvoyée au contrôleur 58 qui en autorise l'ouverture. En option, ce contrôleur 58 en commande l'ouverture.

L'ensemble des consignes, ou des casiers, peut prendre la forme d'une armoire ou d'un rayonnage de casiers, ou toute autre forme.

L'utilisation d'objets agrégés pour commander l'ouverture et la fermeture d'une consigne automatique offre en particulier la possibilité d'attribuer une consigne sans qu'il y ait besoin de transmettre à l'usager la donnée d'adresse de la consigne utilisée.

Cette donnée d'adresse n'a pas non plus à être apposée sur le colis. Et la sélection de la consigne peut être aléatoire.

Un attaquant prêt à forcer, par effraction physique, une consigne pour obtenir un colis particulier stocké ne dispose d'aucune possibilité pour connaître la consigne concernée.

Incidemment, une consigne fermée peut renfermer un colis ou non, sans qu'il soit possible extérieurement de le savoir. En cela cette application se distingue des consignes à allocation en file, ou plus généralement selon une séquence connue.

Finalement, seules la clé privée et, dans des modes de réalisation particuliers, la signature des éléments du colis permettent de retrouver la consigne logeant le colis en question.

Une telle propriété renforce significativement la sécurité des consignes. Cette sécurité peut encore être accrue en conditionnant l'ouverture de la porte du local contenant ces consignes à la présence dans ces consignes d'un colis formant un agrégé intègre avec le porteur de l'étiquette à clé privée.

La vérification de l'intégrité d'un objet agrégé peut s'étendre à plusieurs consignes. Autrement dit, un objet agrégé 1 peut être réparti sur plusieurs consignes différentes. Dans ce cas, la porte de chacune de ces consignes ne peut être fermée, respectivement ouverte, que lorsque l'objet agrégé 1 a été jugé intègre.

Ces consignes peuvent être installées dans des lieux très différents, tels que des halls, salles des pas perdus, locaux spécifiques tels que bureaux de poste, stations de métropolitain, à proximité ou à l'intérieur d'éléments de mobilier urbain, tels que des arrêts de bus, parcs de location de bicyclettes, et autres.

On comprend qu'il s'agit là d'une application particulière qui ne limite pas la portée des applications possibles d'un tel système. Par exemple, le colis peut prendre la forme d'un pli de nature confidentielle. Les premier et second objets agrégés peuvent être utilisés pour commander l'ouverture de portes, ou plus généralement pour contrôler l'accès à des volumes particuliers, dans lesquels se trouve au moins un objet agrégé associé. Par exemple, on peut ainsi contrôler l'accès à un emplacement de stationnement fermé protégeant un véhicule de location.

En plus d'un objet agrégé 1 maintenu dans une consigne particulière, il est possible de constitué un second objet agrégé 2 constitué de chacune des consignes particulière logeant des objets agrégés 1 liés entre eux. Par exemple, l'ensemble des colis 45 ont un même destinataire. Dans ce cas, le second objet agrégé 2 et le destinataire en question peuvent former un troisième objet agrégé.

Une application particulièrement intéressante peut être trouvée dans le domaine du transport aérien. Une compagnie aérienne peut vouloir offrir un service d'acheminement de bagages sécurisés aux voyageurs qui ne souhaitent pas que certains de leurs bagages voyagent en soute, mais qui ne peuvent les conserver en cabine. Le voyageur appose sur ces bagages des étiquettes et les dépose dans des conteneurs de petites dimensions, plusieurs bagages ou objets pouvant être logés dans un même conteneur. L'ensemble des conteneurs utilisés pour un même voyageur forme un premier objet agrégé 1. Ce premier objet et le voyageur forment un second objet agrégé 1. À l'issue du vol, l'ensemble des conteneurs est disposé dans une ou plusieurs consignes, dont l'ouverture est commandée de manière similaire à ce qui a été décrit plus haut. Ces consignes peuvent avantageusement être agencée à proximité du lieu de retrait du reste des bagages du voyageur.

Dans les exemples d'applications donnés ci-dessus, comme dans d'autres applications de l'invention, la surveillance d'objets agrégés 1 ou d'un volume donné 11 peut se faire de manière non continue : le contrôle de l'intégrité peut être réalisé en des lieux géographiques particuliers, à des instants temporels particulier, et/ou au déclenchement d'un événement particulier, y compris une intervention humaine. Ceci permet notamment une surveillance impliquant de moindres consommations énergétiques.

L'invention a été décrite sous la forme d'un dispositif de surveillance. Cependant celle-ci peut être également vue comme un procédé de surveillance d'objets physiques, comprenant les étapes suivantes :
i) prévoir un ensemble d'éléments à mémoire destinés à être attachés à des objets physiques, chacun de ces éléments stockant un identifiant individuel qui lui est propre, et certains au moins d'entre eux stockant des données de description d'objet,
ii) acquérir les données contenues dans des éléments à mémoire présents à proximité d'un ou plusieurs télélecteurs,
iii) distinguer dans les données acquises des identifiants individuels et des données de description d'objet
iv) vérifier la suffisance des données de description de groupe
v) vérifier la conformité des identifiants individuels aux données de description de groupe correspondantes.

L'invention n'est pas limitée aux modes de réalisation précédemment décrits, à titre d'exemples uniquement, mais englobe l'ensemble des variantes que pourra envisager l'homme de l'art. En particulier :
- Aux fins d'illustration, il a été décrit une répartition des données dans différentes zones mémoire des étiquettes 5 en fonction de la signification de ces données. En pratique, une étiquette peut ne comprendre qu'un identifiant constitué de la juxtaposition des différentes données. Par exemple, cet identifiant peut prendre la forme d'une chaîne de caractères composée de la juxtaposition d'un identifiant individuel, d'un identifiant d'objet, de définition d'attribut d'étiquette maîtresse, et/ou de cardinal d'objet.
- L'étiquette maîtresse peut être distincte de l'étiquette comportant les données de description d'objet. Dans ce cas, des conditions de test supplémentaires peuvent être prévues en fonction de la présence dans les étiquettes de l'une ou l'autre de ces étiquettes, voir de leur présence simultanée.
- Chaque étiquette peut être programmée avec une date limite de validité, absolue ou relative, pour éviter que d'anciennes étiquettes, dépourvues de signification actuellement, soient lues et traitées par le dispositif de surveillance de l'invention.

Dans certains cas, les données d'identifiant d'objet, en particulier lorsqu'elles prennent la forme d'une signature, peuvent former tout ou partie des données d'identifiant individuel de l'une des étiquette constitutives de l'objet en question.
- Un même contrôleur 15 peut être agencé de manière à surveiller plusieurs volumes donnés disjoints, chacun de ces volumes étant muni d'au moins un lecteur d'étiquettes 13 relié audit contrôleur. Par exemple, un premier volume peut être constitué par l'habitacle d'un autocar et le second la soute à bagages de cet autocar : le dispositif de surveillance 1 peut alors être prévu pour contrôler les bagages dans ces deux volumes considérés comme formant conjointement un volume à surveiller.
- Ce contrôleur 15 peut se trouver éloigné du ou des volumes à surveiller, y compris être réalisé sous la forme d'une machine "distante" au sens généralement entendu en informatique.
- L'étiquette maîtresse peut être dupliquée de manière, par exemple, qu'un ensemble de bagages puisse être associé à plusieurs porteurs, typiquement une famille. Plus généralement, toute étiquette peut être dupliquée lorsque cela apparaît nécessaire. Autrement dit, des étiquettes distinctes peuvent mémoriser des données identiques, y compris les données d'identifiant individuel E_ID. Par exemple, cela peut être utile lorsqu'on souhaite réaliser une surveillance sur des classes d'objets physiques, plutôt que sur des objets physiques individualisés : une classe d'objets physiques peut être construite en attribuant des données identiques à l'ensemble des étiquettes destinées aux objets de la classe en question.
- Des étiquettes associées à des objets agrégés 1 différents peuvent être apposées sur un même objet physique. Par exemple, un individu peut porter plusieurs étiquettes maîtresses, l'une associée à un objet agrégé 1 constitué par ses bagages les plus lourds. Dans ce cas, il peut être envisagé de programmer une unique étiquette 5 de manière qu'elle comporte des données d'appartenance à plusieurs objets agrégés 1.
- Le lecteur d'étiquettes 13 peut prendre la forme d'un lecteur portable, ou du moins mobile, par exemple pour vérifier l'intégrité d'objets agrégés 1 associés à un ou plusieurs objets physiques encombrants, ou difficilement mobiles.
- Le contrôleur peut être intégré à l'un des objets physiques dont il s'agit de vérifier l'intégrité, ou du moins être physiquement associé à ces objets physiques. Dans ce cas, seul la connexion d'un lecteur d'étiquettes à ce contrôleur est encore nécessaire à la vérification d'intégrité. Dans ce cas, le contrôleur prend avantageusement la forme d'un micro-contrôleur programmé de manière adéquate. Par exemple, lorsqu'il s'agit de vérifier l'intégrité d'un objet agrégé formé de différents colis contenus dans un même conteneur, le contrôleur peut également être disposé à l'intérieur de ce conteneur. Le lecteur d'étiquettes peut prendre la forme d'un portique, par exemple se déplaçant par rapport au conteneur, que l'on vient connecté audit contrôleur. À cette fin, un connecteur peut être disposé sur le conteneur, qui soit accessible depuis l'extérieur de celui-ci. Cela peut permettre de faire vérifier l'intégrité par un organisme tiers, sans ouvrir le conteneur en question et sans divulguer aucune information propre à l'objet agrégé 1.
- Le lecteur d'étiquettes 13 peut lui-même appartenir à un objet agrégé 1. Dans ce cas, une étiquette 13 peut être associée à ce lecteur. Dans le cas où des étiquettes de type RFID fonctionnant dans le cadre NFC sont utilisées, le lecteur d'étiquettes 13 peut prendre la forme d'un téléphone portable compatible avec ce standard. Dans ce cas, ce téléphone peut être agencé de manière à "émuler" le comportement d'une étiquette RFID, éventuellement de manière active, ce qui évite l'apposition d'une telle étiquette sur le téléphone.
- Plus généralement, une ou plusieurs des étiquettes constitutives d'un objet agrégé peut prendre la forme d'un terminal mobile, typiquement un téléphone portable, capable de reproduire le comportement de cette étiquette, comme c'est le cas pour les téléphones capables de fonctionner conformément au standard NFC. La programmation de "l'étiquette" correspondante peut alors comprendre la réception d'un message comportant les différentes données à mémoriser (notamment les données d'identifiant élémentaire E_ID) et reçu par l'intermédiaire de l'un des différents moyens de communications dont le téléphone est doté, par exemple sous la forme d'une message dit "SMS" (pour "Short Message Service" ou service de messages courts en français). Les données mémorisées dans le téléphone peuvent comprendre des données de signature, c'est-à-dire de description d' obj et agrégé. Le terminal utilisé peut être absent lors de la création de l'objet agrégé, par exemple remplacé par une étiquette "mandataire" ou par l'utilisation d'un couple clé publique (pour la création) et clé privée, attachée au terminal, pour la vérification de l'intégrité.
- Dans certains cas, la lecture d'une étiquette peut être inhibée, par exemple en disposant cette dernière à l'intérieur d'un cache électromagnétique (une enveloppe en feuille d'aluminium, par exemple). En particulier, il est possible d'inhiber ainsi la lecture d'une étiquette dupliquée à partir d'une étiquette constitutive d'un obj et agrégé pour disposer d'un double de cette dernière étiquette. Cette étiquette dupliquée peut physiquement appartenir à l'un des objets physiques correspondant à l'objet agrégé en question, et être activée, le cas échéant, en retirant le cache électromagnétique. Une telle étiquette dupliquée, logée dans un cache, peut avantageusement être disposée dans un colis dont il s'agit de vérifier l'intégrité, pour le cas où le colis en question devrait être réexpédié. Autrement dit, l'intégrité du colis peut alors être vérifiée à la fois lors de l'expédition initiale et de la réexpédition, même si l'étiquette comportant initialement les données de description d'objet agrégé est devenue illisible (ce qui est le cas lorsqu'on prévoit une destruction de cette étiquette à l'ouverture du colis).
- Le dispositifpeut être mis en oeuvre pour la surveillance d'objets physiques de nature très différente. Ainsi, le dispositif peut par exemple être mis en oeuvre :
   - dans un musée, pour s'assurer qu'un groupe de visiteurs est complet au passage d'une salle dans une autre,
   - en sortie de parking, pour s'assurer que la personne qui quitte le parking correspond bien au véhicule qu'elle emprunte pour sortir,
   - dans des bâtiments, pour s'assurer qu'un visiteur est toujours accompagné, en particulier dans les zones sensibles,
   - dans le domaine de la santé, pour s'assurer qu'un ensemble de boîtes de médicaments correspond à une ordonnance,
   - dans une salle de réunion, les documents de réunion jugés confidentiels étant étiquetés, pour s'assurer que le responsable de la réunion quitte cette salle avec l'ensemble de ces documents et/ou qu'aucune autre personne ne quitte ladite salle avec l'un des ces documents confidentiels,
   - en un lieu de remise d'un objet physique quelconque, tel qu'un lieu de remise de clés, par exemple à la réception d'un hôtel, pour vérifier la concordance de l'objet remis et de la personne recevant cet objet,
   - dans une consigne, les vêtements et/ou les bagages étant étiquetés de manière à former avec leur propriétaire un même objet agrégé,
   - dans un commerce, pour s'assurer que la personne à qui on a confié un produit à vente contrôlée, tel que de l'alcool ou du tabac, est bien celle qui passe avec ce produit en caisse ou qu'une personne qui passe un tel produit en caisse est bien la personne à qui on a confié ce produit,
   - dans un hôtel, pour vérifier qu'un client ne sorte pas sans une partie essentielle de ses bagages, par exemple son portefeuille, (on vérifie que l'objet est au moins partiellement intègre), et/ou ne quitte pas l'hôtel sans l'ensemble de ses bagages (on vérifie que l'objet est totalement intègre au départ du client), ou encore,
   - dans une bibliothèque ou dans des archives, pour vérifier que la personne qui porte un document particulier est bien autorisée à le faire : des classes d'objets peuvent alors être construites, comme expliqué plus haut, de manière que toutes les personnes autorisées d'une part soient munies d'étiquettes comportant des données identiques, et tous les documents, d'autre part, soient également munis d'étiquettes identiques, l'ensemble des documents pouvant le cas échéant être divisé en plusieurs classes de documents.

On notera que le dispositif selon l'invention permet de vérifier l'intégrité d'un objet agrégé aussi bien lorsque cette intégrité est a priori souhaitable, comme dans les exemples décrits plus haut, que lorsque cette intégrité doit être évitée, en particulier lorsqu'il s'agit de s'assurer que des objets physiques distincts particuliers ne soient pas présents simultanément dans un même volume physique, ce qui peut être le cas pour des produits chimiques ou des médicaments par exemple.

Les données recueillies par ou pour le contrôleur du dispositif selon l'invention peuvent être utilisées, adressées, traitées, stockées ou complétées par d'autres dispositifs appartenant à un même réseau d'information, ou à un réseau distinct, à toutes fins utiles, en particulier statistiques.

### Annexe 1

```
 A.1.1
 on détection (id,ts) do
      Log.append((id,ts))
      if id.gid in list_pending then
             return
      else
             list_pending.add (id.gid)
             prog_check((id,ts), ts+delta_trans)
      endif
 done
 A.1.2
 procédure prog_check ((id,ts), date_trigger)
 A.1.3
 procédure Check (id0,ts0)
        group := vide
        foreach (id,ts) in Log such as
                    id.gid = id0.gid and
                    ts0-ts < Delta_trans
        group := group + (id, ts)
        done
        result := Check_Group(group)
       list_pending.delete(id.gid);
        case result of
         ok_total: do something...
         ok_partiel: ...
         master_missing: ...
          check_failed: ...
  endproc
```

### Annexe 2

```
 A.2.1
 on detection A-B (id,ts) do
     LogAB.append((id,ts))
     if id.gid in list_pendingAB then
         return;
     else
        list_pendingAB.add (id.gid)
        prog_checkAB((id,ts), ts+delta_trans)
     endif
 done
 A.2.2
 on detection B-A (id,ts) do
     LogBA.append((id,ts))
     if id.gid in list_pendingBA then
          return;
     else
        list_pendingBA.add (id.gid)
        prog_checkBA((id,ts), ts+delta_trans)
     endif
 done
 A.2.3
 procedure prog_checkAB ((id,ts), date_trigger)
 procedure prog_checkBA ((id,ts), date_trigger)
 A.2.4
 procedure Check_AB (id0,ts0)
           group := vide
           foreach (id,ts) in LogAB such as
                id.gid = id0.gid
               and ts0-ts < Delta_trans
           group := group + (id, ts)
           done
           result := Check_Group(group)
        list_pendingAB.delete(id.gid)
           case result of
            ok_total: do something...
            ok_partiel: ...
            master_missing: ...
            check_failed: ...
 endproc
 A.2.5
 procedure Check_BA (id0,ts0)
          group := vide
           foreach (id,ts) in LogBA such as
               id.gid = id0.gid and
               ts0-ts < Delta_trans
          group := group + (id, ts)
          done
          result := Check_Group(group)
       list_pendingBA.delete(id.gid)
          case result of
            ok_total: do something...
             ok_partiel: ...
             master_missing: ...
             check_failed: ...
 endproc
```

### Annexe 3

```
 A.3.1
 on detection (id,ts) do
 Log.append((id,ts))
 if id.gid in list_pending then
        return
    else
        list_pending.add (id.gid)
       prog_check((id,ts), ts+delta_trans)
     endif
     done
     A.3.2
     procedure prog_check ((id,ts), date_trigger)
     A.3.3
     procedure Check (id0,ts0)
        group := vide
        foreach (id,ts) in Log such as
                       id.gid = id0.gid and ts0-ts < Delta_trans
               group := group + (id, ts)
        done
        foreach (id,ts) in Log such as
                       id.gid2 = id0.gid and ts0-ts < Delta_trans
               result := check(id,now)
                       if (result == ok_partiel 11 ok_total)
                       group := group + (id.gid,ts)
                       endif
        done
        result := Check_Group(group)
        list_pending.delete(id.gid);
        case result of
        ok_total: do something...
        ok_partiel: ...
        master_missing: ...
        check_failed: ...
        return result
 endproc
```

### Annexe 4

```
 A.4.1
 on detection (id,ts) do
 Log.append((id,ts))
 if id.gid in list_pending then
              return
       else
               list_pending.add (id.gid)
              prog_check((id,ts), ts+delta_trans)
       endif
       done
       A.4.2
       procedure prog_check ((id,ts), date_trigger)
       A.4.3
       procedure Check (id0,ts0)
       group := vide
       foreach (id,ts) in Log such as
 (id.gid = id0.gid or id.gid2 = id0.gid) and
 ts0-ts < Delta_trans
       group := group + (id, ts)
               done
               A.4.4
               result := Check_Group(group)
 list_pending.delete(id.gid);
   case result of
     ok_total: do something...
     ok_partiel: ...
     master_missing: ...
     check_failed: ...
     A.4.5
 return result
 endproc
 done
```

## Revendications

1. Dispositif de surveillance d'objets physiques, du type comprenant :
- un ou plusieurs lecteurs d'étiquettes à courte portée (13) ;
- des étiquettes en tant qu'éléments à mémoire (5) interrogeables à courte distance et destinées à être attachées à des objets physiques ;
**caractérisé en ce que** :
- les étiquettes stockent des identifiant individuels, propres à chacune des étiquettes et certaines au moins de ces étiquettes stockent des données de description de groupe ;
et **en ce que** le dispositif comprend en outre :
- un contrôleur (15) agencé de manière à :
- exécuter une fonction de lecture capable de coopérer avec le ou les lecteurs d'étiquettes pour acquérir les données contenues dans des étiquettes du voisinage, et
- exécuter une fonction de validation d'intégrité capable de distinguer dans les données acquises des identifiants individuels et des données de description de groupe, puis de vérifier la suffisance des données de description de groupe, tout en vérifiant la conformité des identifiants individuels aux données de description de groupe correspondantes.

2. Dispositif selon la revendication 1, dans lequel la fonction de validation d'intégrité est capable de commander l'émission d'une première alerte en cas d'insuffisance des données de description de groupe.

3. Dispositif selon l'une des revendications 1 et 2, dans lequel la fonction de validation d'intégrité est capable de commander l'émission d'une seconde alerte en cas de non-conformité de l'ensemble des identifiants individuels aux données de description de groupe.

4. Dispositif selon l'une des revendications précédentes, dans lequel la fonction de validation est agencée de manière à appeler une fonction de hashage pour générer une valeur-résultat à partir de l'ensemble des identifiants individuels acquis, et à comparer cette valeur-résultat aux données de description de groupe pour vérifier la conformité des identifiants individuels aux données de description de groupe.

5. Dispositif selon l'une des revendications précédentes, dans lequel la fonction de validation d'intégrité est agencée de manière à distinguer dans les données acquises des données d'identifiants de groupe associées à chaque fois à un identifiant individuel et des données de cardinal de groupe, à compter les identifiants individuels acquis en rapport avec un identifiant de groupe particulier puis à comparer le nombre de ces identifiants aux données de cardinal de groupe pour vérifier la conformité des identifiants individuels aux données de description de groupe.

6. Dispositif selon l'une des revendications précédentes, dans lequel le ou les lecteurs d'étiquettes sont disposés de manière que toute étiquette située dans un volume physique donné soit lue.

7. Dispositif selon la revendication 6, dans lequel le volume physique se présente sous la forme d'une enceinte à ouverture/fermeture commandable électroniquement et l'ouverture et/ou la fermeture sont autorisées en fonction de la conformité des identifiants individuels aux données de description de groupe correspondantes.

8. Dispositif selon l'une des revendications précédentes, dans lequel le ou les lecteurs d'étiquettes sont agencés de manière que toute étiquette entrant dans un volume physique donné et toute étiquette sortant de ce volume physique soit lue.

9. Dispositif selon l'une des revendications précédentes, dans lequel les étiquettes sont des étiquettes de type radiofréquence.

10. Dispositif selon l'une des revendications précédentes, dans lequel le contrôleur (15) est en outre agencé de manière à attribuer aux données acquises des étiquettes une date de lecture, et dans lequel la fonction de validation d'intégrité est exécutée uniquement sur des données dont la date est comprise dans un intervalle temporel déterminé.

11. Dispositif selon l'une des revendications précédentes, dans lequel le contrôleur (15) est en outre agencé de manière à classer l'ensemble des données acquises des étiquettes en au moins deux ensembles complémentaires de données, et dans lequel la fonction de validation d'intégrité est exécutée de manière distincte sur les données contenues dans chacun des ensembles complémentaires de données.

12. Dispositif selon la revendication 11, dans lequel le contrôleur (15) est agencé de manière à répartir l'ensemble des données acquises en fonction d'un déplacement de l'étiquette depuis laquelle les données ont été acquises.

13. Dispositif selon l'une des revendications précédentes, dans lequel le contrôleur (15) est agencé de manière à exécuter la fonction de validation d'intégrité après chaque exécution de la fonction de lecture.

14. Dispositif selon l'une des revendications précédentes, dans lequel le contrôleur (15) est agencé de manière à exécuter une fonction de récupération de données supplémentaires, dans lequel la fonction de validation d'intégrité est en outre capable de distinguer dans ces données supplémentaires un ou plusieurs identifiants individuels supplémentaires, puis de vérifier la conformité des identifiants individuels et des identifiants individuels supplémentaires aux données de description de groupe.

15. Dispositif selon l'une des revendication précédentes, dans lequel la fonction de validation d'intégrité est capable de distinguer dans les données de description de groupe, des données de description de premier groupe et des données des description de second groupe, puis de vérifier la suffisance de certaines au moins des données de description de premier groupe et des données des description de second groupe, tout en vérifiant la conformité des identifiants individuels aux données de description de premier groupe et aux données des description de second groupe.

16. Dispositif de surveillance d'objets physiques, du type comprenant :
- un ou plusieurs lecteurs d'étiquettes à courte portée (13) ;
- des étiquettes en tant qu'éléments à mémoire (5) interrogeables à courte distance et destinées à être attachées à des objets physiques ;
**caractérisé en ce que** le dispositif comprend en outre:
- un contrôleur (15) agencé de manière à :
- exécuter une fonction d'écriture capable de coopérer avec le ou les lecteurs d'étiquettes pour écrire dans des étiquettes du voisinage des données d'identifiants individuels, propres à chacune étiquettes, et des données de description de groupe, stockées par certaines au moins de ces étiquettes.

17. Dispositif selon la revendication 16, dans lequel les données d'identifiants individuels comprennent les données de description de groupe.

18. Dispositif selon l'une des revendications 16 et 17, dans lequel les données de description de groupe résultent de l'exécution d'une fonction de hashage appelée avec l'ensemble des identifiants individuels dudit groupe.

19. Dispositif selon l'une des revendications 16 à 18, dans lequel les données de description de groupe inscrites sont établies sur la base des données d'identifiants individuels inscrits et de données d'identifiant individuel supplémentaire.

20. Dispositif selon la revendication 19, dans lequel les données d'identifiant individuel supplémentaire comprennent des données de type clé publique auxquelles correspondent des données d'identifiant individuel de type clé privée.

21. Dispositif selon la revendication 20, dans lequel la fonction d'écriture est capable de coopérer avec le ou les lecteurs d'étiquettes pour écrire dans une étiquette du voisinage les données d'identifiant individuel de type clé privée.

22. Dispositif selon l'une des revendications 16 à 21, dans lequel le contrôleur (15) est agencé de manière à :
- exécuter une fonction de lecture capable de coopérer avec le ou les lecteurs d'étiquettes pour acquérir des données contenues dans des étiquettes du voisinage, et distinguer dans les données acquises des identifiants individuels, propres à chacune des étiquettes,
- exécuter une fonction d'écriture capable de coopérer avec le ou les lecteurs d'étiquettes pour écrire dans certaines au moins des étiquettes du voisinage des données de description de groupe.

23. Dispositif selon la revendication 22, dans lequel le contrôleur (15) est agencé de manière à :
- exécuter une fonction de lecture capable de coopérer avec le ou les lecteurs d'étiquettes pour acquérir des données contenues dans des étiquettes du voisinage, et distinguer dans les données acquises des identifiants individuels, propres à chacune des étiquettes,
- exécuter une fonction d'écriture capable de coopérer avec le ou les lecteurs d'étiquettes pour écrire dans certaines au moins des étiquettes du voisinage des données de description de groupe établies sur la base des identifiants individuels.

24. Dispositif selon la revendication 23, dans lequel les données acquises comprennent un identifiant individuel de type clé privé, et les données de description de groupe sont établies de manière à pouvoir être vérifiées en termes de conformité avec un identifiant individuel de type clé publique en remplacement dudit identifiant individuel de type clé privée.

## Patentansprüche

1. Vorrichtung zum Überwachen physischer Objekte, die von der Art ist, die umfasst:
- einen oder mehrere Etikettenleser (13) kurzer Reichweite;
- Etiketten als Speicherelemente (5), die aus kurzem Abstand abfragbar und dazu bestimmt sind, an physischen Objekten angebracht zu sein;
**dadurch gekennzeichnet, dass**:
- die Etiketten individuelle Kennungen gespeichert haben, die jeweils den Etiketten eigen sind, und zumindest einige dieser Etiketten Gruppenbeschreibungsdaten gespeichert haben;
dass die Vorrichtung darüber hinaus umfasst:
- eine Steuerung (15), die dazu eingerichtet ist:
- eine Lesefunktion auszuführen, die mit dem oder den Etikettenleser/n zusammenwirken kann, um Daten zu erfassen, die in den Etiketten der Umgebung enthalten sind, und
- eine Integritätsvalidierungsfunktion auszuführen, die aus den erfassten Daten individuelle Kennungen und Gruppenbeschreibungsdaten unterscheiden kann, dann die Angemessenheit der Gruppenbeschreibungsdaten verifizieren kann, indem die Konformität der individuellen Kennungen mit den entsprechenden Gruppenbeschreibungsdaten verifiziert wird.

2. Vorrichtung nach Anspruch 1, wobei die Integritätsvalidierungsfunktion das Aussenden einer ersten Warnung im Falle einer Unangemessenheit der Gruppenbeschreibungsdaten ansteuern kann.

3. Vorrichtung nach einem der Ansprüche 1 und 2, wobei die Integritätsvalidierungsfunktion das Aussenden einer zweiten Warnung im Falle einer Nichtkonformität der Gesamtheit der individuellen Kennungen mit den Gruppenbeschreibungsdaten ansteuern kann.

4. Vorrichtung nach einem der vorhergehenden Ansprüche, wobei die Validierungsfunktion dazu eingerichtet ist, eine Hash-Funktion aufzurufen, um aus der Gesamtheit der erfassten individuellen Kennungen einen Ergebniswert zu generieren und diesen Ergebniswert mit den Gruppenbeschreibungsdaten zu vergleichen, um die Konformität individueller Kennungen mit den Gruppenbeschreibungsdaten zu verifizieren.

5. Vorrichtung nach einem der vorhergehenden Ansprüche, wobei die Integritätsvalidierungsfunktion dazu eingerichtet ist, in den erfassten Daten Gruppenkennungsdaten, die jeweils einer individuellen Kennung zugeordnet sind, und Gruppenhauptdaten zu unterscheiden, die erfassten individuellen Kennungen in Bezug auf eine spezielle Gruppenkennung zu zählen, dann die Anzahl dieser Kennungen mit den Gruppenhauptdaten zu vergleichen, um die Konformität der individuellen Kennungen mit den Gruppenbeschreibungsdaten zu verifizieren.

6. Vorrichtung nach einem der vorhergehenden Ansprüche, wobei der oder die Etikettenleser so angeordnet ist/sind, dass jedes Etikett, das sich in einem physikalischen Volumen befindet, gelesen wird.

7. Vorrichtung nach Anspruch 6, wobei sich das physikalische Volumen in Form einer Umhüllung mit elektronisch steuerbarem Öffnen/Schließen darstellt und das Öffnen und/oder das Schließen in Abhängigkeit von der Konformität der individuellen Kennungen mit den entsprechenden Gruppenbeschreibungsdaten gesteuert wird/werden.

8. Vorrichtung nach einem der vorhergehenden Ansprüche, wobei der oder die Etikettenleser so eingerichtet ist/sind, dass jedes Etikett, das in ein bestimmtes physikalisches Volumen eintritt, und jedes Etikett, das aus diesem physikalischen Volumen austritt, gelesen wird.

9. Vorrichtung nach einem der vorhergehenden Ansprüche, wobei die Etiketten vom Typ Funkfrequenzetiketten sind.

10. Vorrichtung nach einem der vorhergehenden Ansprüche, wobei die Steuerung (15) darüber hinaus dazu eingerichtet ist, den erfassten Daten der Etiketten einen Lesezeitpunkt zuzuteilen, und wobei die Integritätsvalidierungs-funktion einzig an den Daten ausgeführt wird, deren Zeitpunkt in einer bestimmten Zeitspanne enthalten ist.

11. Vorrichtung nach einem der vorhergehenden Ansprüche, wobei die Steuerung (15) darüber hinaus dazu eingerichtet ist, die Gesamtheit der erfassten Daten der Etiketten in mindestens zwei komplementäre Datensätze einzuordnen, und wobei die Integritätsvalidierungsfunktion auf unterschiedliche Weise an den in jedem der komplementären Datensätze enthaltenen Daten ausgeführt wird.

12. Vorrichtung nach Anspruch 11, wobei die Steuerung (15) dazu eingerichtet ist, die Gesamtheit der erfassten Daten in Abhängigkeit von einer Verlagerung des Etiketts von der Stelle, an der die Daten erfasst wurden, zu verteilen.

13. Vorrichtung nach einem der vorhergehenden Ansprüche, wobei die Steuerung (15) dazu eingerichtet ist, die Integritätsvalidierungsfunktion nach jeder Ausführung der Lesefunktion auszuführen.

14. Vorrichtung nach einem der vorhergehenden Ansprüche, wobei die Steuerung (15) dazu eingerichtet ist, eine Zusatzdatenwiederherstellungsfunktion auszuführen, wobei die Integritätsvalidierungsfunktion darüber hinaus in der Lage ist, aus den Zusatzdaten eine oder mehrere zusätzliche individuelle Kennung/en zu unterscheiden, und dann die Konformität der individuellen Kennungen und der zusätzlichen individuellen Kennungen mit den Gruppenbeschreibungsdaten zu verifizieren.

15. Vorrichtung nach einem der vorhergehenden Ansprüche, wobei die Integritätsvalidierungsfunktion aus den Gruppenbeschreibungsdaten Beschreibungsdaten einer ersten Gruppe und Beschreibungsdaten einer zweiten Gruppe unterscheiden kann, dann die Angemessenheit zumindest einiger der Beschreibungsdaten der ersten Gruppe und der Beschreibungsdaten der zweiten Gruppe verifizieren kann, indem sie die Konformität der individuellen Kennungen mit den Beschreibungsdaten der ersten Gruppe und den Beschreibungsdaten der zweiten Gruppe verifiziert.

16. Vorrichtung zum Überwachen physischer Objekte, die von der Art ist, die umfasst:
- einen oder mehrere Etikettenleser (13) kurzer Reichweite;
- Etiketten als Speicherelemente (5), die aus kurzem Abstand abfragbar und dazu bestimmt sind, an physischen Objekten angebracht zu sein;
**dadurch gekennzeichnet, dass** die Vorrichtung darüber hinaus umfasst:
- eine Steuerung (15) dazu eingerichtet ist:
- eine Lesefunktion auszuführen, die mit dem oder den Etikettenleser/n zusammenwirken kann, um in die Etiketten der Umgebung Daten individueller Kennungen, die jedem der Etiketten zueigen sind, und Gruppenbeschreibungsdaten einzuschreiben, die von zumindest einigen dieser Etiketten gespeichert werden.

17. Vorrichtung nach Anspruch 16, wobei die Daten individueller Kennungen die Gruppenbeschreibungsdaten enthalten.

18. Vorrichtung nach einem der Ansprüche 16 und 17, wobei die Gruppenbeschreibungsdaten sich aus der Ausführung einer Hash-Funktion ergeben, die mit der Gesamtheit der individuellen Kennungen der Gruppe aufgerufen wird.

19. Vorrichtung nach einem der Ansprüche 16 bis 18, wobei die eingeschriebenen Gruppenbeschreibungsdaten auf Grundlage der eingeschriebenen Daten individueller Kennungen und Daten einer zusätzlichen individuellen Kennung erstellt werden.

20. Vorrichtung nach Anspruch 19, wobei die Daten einer zusätzlichen individuellen Kennung Daten des Typs öffentlicher Schlüssel enthalten, denen Daten einer individuellen Kennung des Typs privater Schlüssel entsprechen.

21. Vorrichtung nach Anspruch 20, wobei die Lesefunktion mit dem oder den Etikettenleser/n zusammenwirken kann, um in ein Etikett der Umgebung die Daten einer individuellen Kennung des Typs privater Schlüssel einzuschreiben.

22. Vorrichtung nach einem der Ansprüche 16 bis 21, wobei die Steuerung (15) dazu eingerichtet ist:
- eine Lesefunktion auszuführen, die mit dem oder den Etikettenleser/n zusammenwirken kann, um Daten zu erfassen, die in den Etiketten der Umgebung enthalten sind, und in den erfassten Daten individuelle Kennungen zu unterscheiden, die jedem der Etiketten zueigen sind,
- eine Lesefunktion auszuführen, die mit dem oder den Etikettenleser/n zusammenwirken kann, um in zumindest einige der Etiketten der Umgebung Gruppenbeschreibungsdaten einzuschreiben.

23. Vorrichtung nach Anspruch 22, wobei die Steuerung (15) dazu eingerichtet ist:
- eine Lesefunktion auszuführen, die mit dem oder den Etikettenleser/n zusammenwirken kann, um Daten zu erfassen, die in den Etiketten der Umgebung enthalten sind, und in den erfassten Daten individuelle Kennungen zu unterscheiden, die jedem der Etiketten zueigen sind,
- eine Lesefunktion auszuführen, die mit dem oder den Etikettenleser/n zusammenwirken kann, um in zumindest einige der Etiketten der Umgebung Gruppenbeschreibungsdaten einzuschreiben, die auf Grundlage der individuellen Kennungen erstellt sind.

24. Vorrichtung nach Anspruch 23, wobei die erfassten Daten eine individuelle Kennung des Typs privater Schlüssel enthalten und die Gruppenbeschreibungsdaten, um in Bezug auf die Konformität mit einer individuellen Kennung des Typs öffentlicher Schlüssel verifiziert werden zu können, erstellt werden, indem die individuelle Kennung des Typs privater Schlüssel ersetzt wird.

## Claims

1. Device for monitoring physical objects, of the type comprising:
- one or more short-range tag readers (13);
- tags as memory elements (5) that can be interrogated at short range and intended to be attached to physical objects;
**characterized in that**:
- the tags store individual identifiers, specific to each of the tags and at least some of these tags store group description data;
and **in that** the device further comprises:
- a controller (15) arranged to:
- execute a read function capable of cooperating with the tag reader or readers to acquire the data contained in tags in the vicinity, and
- execute an integrity validation function capable of distinguishing in the data acquired individual identifiers and group description data, then of checking the adequacy of the group description data, while checking the conformity of the individual identifiers to the corresponding group description data.

2. Device according to Claim 1, in which the integrity validation function is capable of ordering the emission of a first alert in case of inadequacy of the group description data.

3. Device according to either of Claims 1 and 2, in which the integrity validation function is capable of ordering the emission of a second alert in case of nonconformity of the set of individual identifiers to the group description data.

4. Device according to one of the preceding claims, in which the validation function is arranged to call a hash function to generate a result value from the set of individual identifiers acquired, and to compare this result value to the group description data to check the conformity of the individual identifiers to the group description data.

5. Device according to one of the preceding claims, in which the integrity validation function is arranged to distinguish in the data acquired group identifier data associated each time with an individual identifier and group cardinal data, to count the individual identifiers acquired in relation to a particular group identifier, then to compare the number of these identifiers to the group cardinal data to check the conformity of the individual identifiers to the group description data.

6. Device according to one of the preceding claims, in which the tag reader or readers are arranged in such a way that any tag situated within a given physical volume is read.

7. Device according to Claim 6, in which the physical volume takes the form of an enclosure with electronically controllable opening/closure and the opening and/or closure are authorized as a function of the conformity of the individual identifiers to the corresponding group description data.

8. Device according to one of the preceding claims, in which the tag reader or readers are arranged in such a way that any tag entering into a given physical volume and any tag leaving this physical volume is read.

9. Device according to one of the preceding claims, in which the tags are tags of radiofrequency type.

10. Device according to one of the preceding claims, in which the controller (15) is further arranged to assign a reading date to the data acquired from the tags, and in which the integrity validation function is executed only on data whose date lies within a determined time interval.

11. Device according to one of the preceding claims, in which the controller (15) is further arranged to classify all the data acquired from the tags in at least two complementary datasets, and in which the integrity validation function is executed distinctly on the data contained in each of the complementary datasets.

12. Device according to Claim 11, in which the controller (15) is arranged to distribute all the data acquired as a function of a movement of the tag from which the data have been acquired.

13. Device according to one of the preceding claims, in which the controller (15) is arranged to execute the integrity validation function after each execution of the read function.

14. Device according to one of the preceding claims, in which the controller (15) is arranged to execute an additional data recovery function, in which the integrity validation function is further capable of distinguishing, in these additional data, one or more additional individual identifiers, then of checking the conformity of the individual identifiers and of the additional individual identifiers to the group description data.

15. Device according to one of the preceding claims, in which the integrity validation function is capable of distinguishing in the group description data first group description data and second group description data, then of checking the adequacy of at least some of the first group description data and of the second group description data, while checking the conformity of the individual identifiers to the first group description data and to the second group description data.

16. Device for monitoring physical objects, of the type comprising:
- one or more short-range tag readers (13);
- tags as memory elements (5) that can be interrogated at short range and intended to be attached to physical objects;
**characterized in that** the device further comprises:
- a controller (15) arranged to:
- execute a write function capable of cooperating with the tag reader or readers to write in tags in the vicinity individual identifier data, specific to each tag, and group description data, stored by at least some of these tags.

17. Device according to Claim 16, in which the individual identifier data comprise the group description data.

18. Device according to either of Claims 16 and 17, in which the group description data result from the execution of a hash function called with the set of individual identifiers of said group.

19. Device according to one of Claims 16 to 18, in which the group description data entered are established on the basis of the individual identifier data entered and of additional individual identifier data.

20. Device according to Claim 19, in which the additional individual identifier data comprise data of public key type which have corresponding individual identifier data of private key type.

21. Device according to Claim 20, in which the write function is capable of cooperating with the tag reader or readers to write in a tag in the vicinity the individual identifier data of private key type.

22. Device according to one of Claims 16 to 21, in which the controller (15) is arranged to:
- execute a read function capable of cooperating with the tag reader or readers to acquire data contained in tags in the vicinity, and distinguish in the data acquired individual identifiers, specific to each of the tags,
- execute a write function capable of cooperating with the tag reader or readers to write in at least some of the tags in the vicinity group description data.

23. Device according to Claim 22, in which the controller (15) is arranged to:
- execute a read function capable of cooperating with the tag reader or readers to acquire data contained in tags in the vicinity, and distinguish in the data acquired individual identifiers, specific to each of the tags,
- execute a write function capable of cooperating with the tag reader or readers to write in at least some of the tags in the vicinity group description data established on the basis of the individual identifiers.

24. Device according to Claim 23, in which the data acquired comprise an individual identifier of private key type, and the group description data are established to be able to be checked in terms of conformity with an individual identifier of public key type in place of said individual identifier of private key type.
